# EUROPEAN PATENT APPLICATION

(11) **EP 1 898 632 A1**
(43) Date of publication of application: **12.03.2008**
(21) Application number: 07016764.8
(22) Date of filing: 27.08.2007
(51) Int. Cl.: H04N 5/232, G02B 27/01, G06F 3/01, G06F 3/048, G01P 1/02

(54) **Image pickup apparatus and image pickup method**

(30) Priority: 08.09.2006 JP 2006244687
(71) Applicant: Sony Corporation, Minato-ku Tokyo 108-0075 (JP)
(72) Inventor: Sako, Yoichiro, Tokyo 108-0075 (JP); Tsuruta, Masaaki, Tokyo 108-0075 (JP); Ito, Taiji, Tokyo 108-0075 (JP); Asukai, Masamichi, Tokyo 108-0075 (JP)
(74) Representative: Müller - Hoffmann & Partner

(57) **Abstract**

An image pickup apparatus includes image pickup means, user information acquisition means, and control means. The image pickup means is configured to pick up an image while regarding a user's gaze direction as the direction of a subject. The user information acquisition means is configured to acquire information about the motion or physical status of the user. The control means is configured to judge the intention or status of the user from the information acquired by the user information acquisition means and control the operation of the image pickup means in accordance with judgment results.

## Description

### CROSS REFERENCES TO RELATED APPLICATIONS

The present invention contains subject matter related to Japanese Patent Application JP 2006-244687 filed in the Japan Patent Office on September 8, 2006, the entire contents of which being incorporated herein by reference.

### BACKGROUND OF THE INVENTION

### 1. Field of the Invention

The present invention relates to an image pickup apparatus that is mounted on a user, for instance, with an eyeglass-type or head-worn mounting unit to pick up an image while regarding the user's gaze direction as the direction of a subject. The present invention also relates to an image pickup method for use in such an image pickup apparatus.

### 2. Description of the Related Art

The apparatus proposed, for instance, by Japanese Patent Laid-open No. 2005-172851 is configured so that a small-size camera is mounted in an eyeglass-type or head-worn mounting unit to image a scene that is visible in the user's gaze direction.

### SUMMARY OF THE INVENTION

However, apparatuses developed so far do not precisely image a user-viewed scene in a variety of imaging modes in accordance with the intention or status of the user while saving the user the bother of operating an operating key or other operating control.

Under the above circumstances, there is a need for providing precise image pickup operational control in accordance with the status (e.g., intention or physical status) of the user.

According to an embodiment of the present invention, there is provided an image pickup apparatus including an image pickup section, a user information acquisition section, and a control section. The image pickup section is configured to pick up an image while regarding a user's gaze direction as the direction of a subject. The user information acquisition section is configured to acquire information about the motion or physical status of the user. The control section is configured to judge the intention or status of the user from the information acquired by the user information acquisition section and control the operation of the image pickup section in accordance with judgment results.

According to another embodiment of the present invention, there is provided the image pickup apparatus further including a display section configured to display the image picked up by the image pickup section.

According to another embodiment of the present invention, there is provided the image pickup apparatus further including a recording section configured to record the image picked up by the image pickup section on a recording medium. In this instance, the control section controls the start or end of a recording operation of the recording section in accordance with the information acquired by the user information acquisition section.

According to another embodiment of the present invention, there is provided the image pickup apparatus further including a transmission section configured to transmit the image picked up by the image pickup section to an external device. In this instance, the control section controls the start or end of a transmission operation of the transmission section in accordance with the information acquired by the user information acquisition section.

According to another embodiment of the present invention, there is provided the image pickup apparatus, wherein the image pickup section uses a CCD sensor or a CMOS sensor as an image pickup device.

According to another embodiment of the present invention, there is provided the image pickup apparatus, wherein the user information acquisition section is a sensor for detecting acceleration, angular velocity, or vibration.

According to another embodiment of the present invention, there is provided the image pickup apparatus, wherein the user information acquisition section is a sensor for detecting the motion of a head of the user, the motion of an arm of the user, the motion of a hand of the user, the motion of a leg of the user, or the motion of the entire body of the user.

According to another embodiment of the present invention, there is provided the image pickup apparatus, wherein the user information acquisition section is a sensor for detecting that the user is not walking, is walking, or is running.

According to another embodiment of the present invention, there is provided the image pickup apparatus, wherein the user information acquisition section is a visual sensor for detecting the visual information about the user.

According to another embodiment of the present invention, there is provided the image pickup apparatus, wherein the user information acquisition section is a sensor for detecting the direction of the user's gaze, the focal distance of the user, the status of a user's pupil, the fundus pattern of the user, or the motion of a user's eyelid as the visual information about the user.

According to another embodiment of the present invention, there is provided the image pickup apparatus, wherein the user information acquisition section is a biological sensor for detecting the biological information about the user.

According to another embodiment of the present invention, there is provided the image pickup apparatus, wherein the user information acquisition section is a sensor for detecting the heartbeat information about the user, the pulse information about the user, the perspiration information about the user, the brain wave information about the user, the galvanic skin reflex information about the user, the blood pressure information about the user, the body temperature information about the user, or the respiratory activity information about the user as the biological information about the user.

According to another embodiment of the present invention, there is provided the image pickup apparatus, wherein the user information acquisition section is a biological sensor for detecting information indicating that the user is nervous or excited.

According to another embodiment of the present invention, there is provided the image pickup apparatus, wherein the control section controls the start or end of an image pickup operation of the image pickup section.

According to another embodiment of the present invention, there is provided the image pickup apparatus, wherein the control section exercises variable control over telephoto imaging and wide-angle imaging functions of the image pickup section.

According to another embodiment of the present invention, there is provided the image pickup apparatus, wherein the control section exercises focus control of the image pickup section.

According to another embodiment of the present invention, there is provided the image pickup apparatus, wherein the control section exercises variable control over an imaging sensitivity of the image pickup section.

According to another embodiment of the present invention, there is provided the image pickup apparatus, wherein the control section exercises variable control over infrared imaging sensitivity of the image pickup section.

According to another embodiment of the present invention, there is provided the image pickup apparatus, wherein the control section exercises variable control over ultraviolet imaging sensitivity of the image pickup section.

According to another embodiment of the present invention, there is provided the image pickup apparatus, wherein the control section exercises variable control over a frame rate of the image pickup section.

According to another embodiment of the present invention, there is provided the image pickup apparatus, wherein the control section exercises operational control over an imaging lens system of the image pickup section.

According to another embodiment of the present invention, there is provided the image pickup apparatus, wherein the control section exercises operational control of an imaging signal processing section that processes an imaging signal obtained by the image pickup device in the image pickup section.

According to another embodiment of the present invention, there is provided the image pickup apparatus further including an illumination section configured to illuminate in the direction of the subject, wherein the control section controls an illumination operation of the illumination section in accordance with the information acquired by the user information acquisition section.

According to still another embodiment of the present invention, there is provided an image pickup method for use in an image pickup apparatus that includes an image pickup section configured to pick up an image while regarding a user's gaze direction as the direction of a subject, the method including the steps of: acquiring information about the motion or physical status of the user; and judging the intention or status of the user from the information acquired in the user information acquisition step and controlling the operation of the image pickup section in accordance with judgment results.

When the user wears an eyeglass-type or head-worn mounting unit, the image pickup section according to an embodiment of the present invention images a scene that is visible in the user's gaze direction. The image picked up by the image pickup section is displayed by the display section, recorded onto a recording medium by the recording section, and transmitted to an external device by the transmission section.

It is preferred that various image pickup operations be properly controlled in accordance with the intention and status of the user, which is represented, for instance, by an image pickup function on/off operation, a selected imaging mode (e.g., zoom status and focus status), imaging sensitivity adjustment, luminance level, and other signal processes, and an imaging frame rate. However, the present invention acquires the information about the motion or physical status of the user instead of prompting the user to operate an operating control, judges the intention or status of the user from the acquired information, and performs various appropriate control operations in accordance with judgment results.

The present invention uses the image pickup section to image a scene that is visible the user's gaze direction. In this instance, control is exercised after judging the intention or status of the user in accordance with the information about the motion or physical status of the user. Therefore, a precise image pickup operation is performed in accordance with the intention or status of the user and without imposing an operating load on the user. This ensures that a scene visible in the user's gaze direction can be imaged in an appropriate mode with precise timing. Further, when picked-up image data is stored on a recording medium or transmitted to an external device, the scene visible to a certain user can be shared by a plurality of persons or later reproduced and viewed.

### BRIEF DESCRIPTION OF THE DRAWINGS

FIG. 1 is a typical external view of an image pickup apparatus according to an embodiment of the present invention;
FIG. 2 is a typical external view of another image pickup apparatus according to an embodiment of the present invention;
FIG. 3 is a block diagram illustrating an image pickup apparatus according to an embodiment of the present invention;
FIG. 4 is a block diagram illustrating another image pickup apparatus according to an embodiment of the present invention;
FIGS. 5A to 5C illustrate a see-through state, a normally-picked-up image, and a telephoto-picked-up image;
FIGS. 6A and 6B illustrate an enlarged image according to an embodiment of the present invention;
FIGS. 7A and 7B illustrate an adjusted image according to an embodiment of the present invention;
FIGS. 8A and 8B illustrate an image that is obtained with infrared sensitivity raised in accordance with an embodiment of the present invention;
FIGS. 9A and 9B illustrate an image that is obtained with ultraviolet sensitivity raised in accordance with an embodiment of the present invention;
FIG. 10 is a flowchart illustrating a control process according to an embodiment of the present invention;
FIG. 11 is a flowchart illustrating another control process according to an embodiment of the present invention;
FIG. 12 is a flowchart illustrating still another control process according to an embodiment of the present invention;
FIGS. 13A and 13B are flowcharts illustrating an imaging start trigger judgment process according to an embodiment of the present invention;
FIGS. 14A and 14B are flowcharts illustrating an imaging start trigger judgment process according to an embodiment of the present invention;
FIGS. 15A and 15B are flowcharts illustrating an imaging operation control trigger judgment process according to an embodiment of the present invention;
FIG. 16 is a flowchart illustrating an imaging operation control trigger judgment process according to an embodiment of the present invention;
FIG. 17 is a flowchart illustrating an imaging operation control trigger judgment process according to an embodiment of the present invention;
FIGS. 18A and 18B are flowcharts illustrating an imaging operation control trigger judgment process according to an embodiment of the present invention;
FIGS. 19A and 19B are flowcharts illustrating an imaging end trigger judgment process according to an embodiment of the present invention; and
FIGS. 20A and 20B are flowcharts illustrating an imaging end trigger judgment process according to an embodiment of the present invention.

### DETAILED DESCRIPTION OF THE PREFERRED EMBODIMENTS

An image pickup apparatus and image pickup method according to embodiments of the present invention will now be described in the following sequence:
1. Typical External Views of the Image Pickup Apparatus
2. Typical Configurations of the Image Pickup Apparatus
3. Typical Picked-Up Images
4. User Status Judgment
5. Examples of Various Operations
6. Advantages of Embodiments and Modified or Extended Embodiments

### 1. Typical External Views of the Image Pickup Apparatus

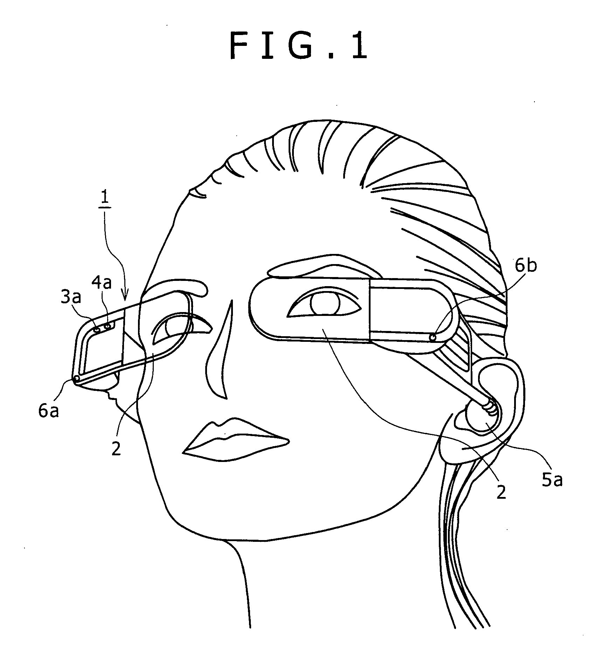

FIG. 1 is an external view of an image pickup apparatus 1 that is an eyeglass-type display camera according to an embodiment of the present invention. The image pickup apparatus 1 has a mounting unit, which has, for instance, a semicircular frame structure that extends from one temporal region of head to another via an occipital region, and is mounted on a user as it engages with ear capsules.

When the image pickup apparatus 1 is mounted on the user as shown in FIG. 1, a pair of display sections 2 (for the right- and left-hand eyes) are positioned immediately before the eyes of the user, namely, positioned the same as the lenses of common eyeglasses. The display sections 2 are made, for instance, of liquid-crystal panels, and can be rendered see-through, that is, transparent or semitransparent, by controlling transmittance. As the display sections 2 are see-through, the user's daily life remains unaffected even when the user constantly wears the image pickup apparatus 1 just like eyeglasses.

An imaging lens 3a, which faces forward, is positioned so that the image pickup apparatus 1 mounted on the user picks up an image while regarding a user's gaze direction as the direction of a subject.

A light-emitting section 4a is positioned to illuminate in the direction of imaging by the imaging lens 3a. The light-emitting section 4a is made, for instance, of an LED (Light Emitting Diode).

A pair of earphone speakers 5a are furnished so that they can be inserted into right- and left-hand ear holes when the image pickup apparatus 1 is mounted on the user (although only the left-hand earphone speaker is shown in the figure).

Microphones 6a, 6b, which collect external sound, are positioned to the right of the display section 2 for the right-hand eye and to the left of the display section 2 for the left-hand eye.

The structure shown in FIG. 1 is merely an example. A variety of structures may be employed for mounting the image pickup apparatus 1 on the user. A so-called eyeglass-type or head-worn mounting unit should be used to mount the image pickup apparatus 1 on the user. The present embodiment is configured so that at least the display sections 2 are positioned in front of and close to the user's eyes while the imaging direction of the imaging lens 3a is equal to the user's gaze direction, that is, the direction in which the user faces. It is assumed that a pair of display sections 2 are provided to cover both eyes. However, an alternative configuration may be employed so that one display section 2 is provided to cover one eye.

It is also assumed that the right- and left-hand earphone speakers 5a are provided. However, an alternative configuration may be employed so that only one earphone speaker is provided to cover only one ear. Further, one microphone may alternatively be provided instead of providing the right- and left-hand microphones 6a, 6b. Furthermore, an alternative configuration may be employed so that the image pickup apparatus 1 does not include any microphone or earphone speaker.

It is also alternatively conceivable that the image pickup apparatus 1 may be configured to exclude the light-emitting section 4a.

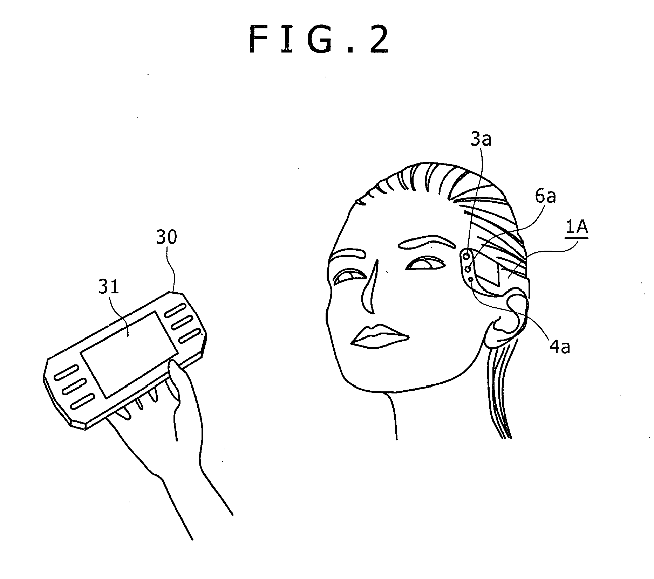

The image pickup apparatus 1 shown in FIG. 1 is configured so that an image pickup section is integral with the display sections 2, which allow the user to monitor a picked-up image. On the other hand, the image pickup apparatus 1A shown in FIG. 2 is configured so that a display section 2 is a separate piece.

The image pickup apparatus 1A shown in FIG. 2 is mounted on the user's head with a predetermined mounting frame. The imaging lens 3a, which faces forward, is positioned so as to pick up an image while regarding the user's gaze direction as the direction of a subject.

The light-emitting section 4a is furnished to illuminate in the direction of imaging by the imaging lens 3a. The light-emitting section 4a is made, for instance, of an LED.

In addition, the microphone 6a is furnished to collect external sound.

In the above instance, the image pickup apparatus 1A has a built-in communication section that transmits picked-up image data to an external device, as described later. For example, a mobile display unit 30 may be used as the external device. The image pickup apparatus 1A transmits picked-up image data to the display unit 30. The display unit 30 receives the picked-up image data and displays it on a display screen 31.

The user can monitor the picked-up image when he/she carries the mobile display unit 30.

Although the mobile display unit is mentioned above as the separate display unit 30, an alternative would be to use a stationary display unit, a computer, a television receiver, a cellular phone, a PDA (Personal Digital Assistant), or the like as the separate display unit 30. If the image pickup apparatus 1A does not have a monitoring/displaying function (or even if it has a monitoring/displaying function just like the image pickup apparatus 1 shown in FIG. 1), an external display unit can be used to monitor picked-up image data.

The external device to which the image pickup apparatus 1 (or 1A) transmits picked-up image data by exercising its communication function may be a video storage device, a computer, a server, or the like in addition to the aforementioned various display devices. The external device can be used to store or distribute picked-up image data.

### 2. Typical Configurations of the Image Pickup Apparatus

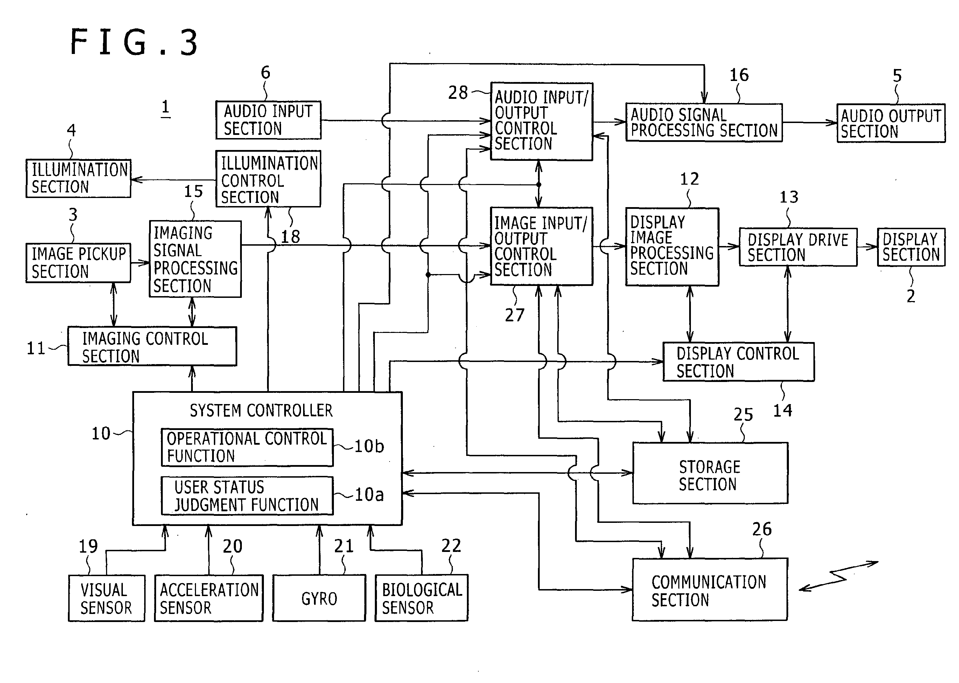

FIG. 3 shows a typical internal configuration of the image pickup apparatus 1. This figure shows a typical configuration of the image pickup apparatus 1 that functions as an eyeglass-type display camera as shown in FIG. 1 and incorporates both the image pickup function and display function.

A system controller 10 is a microcomputer that includes, for instance, a CPU (Central Processing Unit), a ROM (Read Only Memory), a RAM (Random Access Memory), a nonvolatile memory section, and an interface section.
The system controller 10 is regarded as a control section that provides overall control over the image pickup apparatus 1.

The system controller 10 controls various sections in the image pickup apparatus 1 in accordance with the status of the user. More specifically, the system controller 10 detects/judges the status of the user and operates in accordance with an operating program that exercises operational control over various sections in accordance with the detected/judged user status. From the viewpoint of functionality, therefore, the system controller 10 has a user status judgment function 10a, which judges the status of the user, and an operational control function 10b, which issues control instructions to various sections in accordance with judgment results produced by the user status judgment function 10a, as shown in the figure.

As components for imaging a scene in front of the user, the image pickup apparatus 1 includes an image pickup section 3, an imaging control section 11, and an imaging signal processing section 15.

The image pickup section 3 includes a lens system, which contains the imaging lens 3a shown in FIG. 1, a diaphragm, zoom lens, focus lens, and the like; a drive system, which drives the lens system to perform a focusing operation or zooming operation; and a solid-state image sensor array, which detects imaging light acquired by the lens system and effects photoelectric conversion to generate an imaging signal. The solid-state image sensor array is, for instance, a CCD (Charge Coupled Device) sensor array or CMOS (Complementary Metal Oxide Semiconductor) sensor array.

The imaging signal processing section 15 includes a sample-and-hold/AGC (Automatic Gain Control) circuit, which performs gain adjustment and waveform shaping operations on a signal acquired by the solid-state image sensor array in the image pickup section 3, and a video A/D converter, and obtains an imaging signal in the form of digital data. The imaging signal processing section 15 performs, for instance, a white balance process, luminance process, color signal process, and image blur correction process on an imaging signal.

The imaging control section 11 controls the operations of the image pickup section 3 and imaging signal processing section 15 in accordance with instructions from the system controller 10. For example, the imaging control section 11 exercises control to turn on or off the image pickup section 3 and imaging signal processing section 15. The imaging control section 11 also exercises control (motor control) to let the image pickup section 3 perform auto-focusing, automatic exposure adjustment, aperture adjustment, zooming, and other operations.

Further, the imaging control section 11 includes a timing generator, which generates a timing signal. The timing signal is used to control signal processing operations of the solid-state image sensor array, the sample-and-hold/AGC circuit in the imaging signal processing section 15, and the video A/D converter. This timing control function is also used to exercise variable control over the imaging frame rate.

Furthermore, the imaging control section 11 controls the imaging sensitivity and signal process in the solid-state image sensor array and imaging signal processing section 15. For imaging sensitivity control purposes, for example, the imaging control section 11 can exercise gain control over the signal read from the solid-state image sensor array, black level setup control, coefficient control over a digital imaging signal data process, and correction amount control over the image blur correction process. As regards imaging sensitivity, for example, the imaging control section 11 can make overall sensitivity adjustments without paying special attention to the wavelength band and adjust the imaging sensitivity of a particular wavelength band such as an infrared region or ultraviolet region. Wavelength-specific sensitivity adjustments can be made by inserting a wavelength filter into the imaging lens system or by performing a wavelength filter computation process on the imaging signal. In the above instances, the imaging control section 11 can provide sensitivity control, for instance, by exercising insertion control of the wavelength filter or by specifying a filter computation coefficient.

The imaging signal (picked-up image data) picked up by the image pickup section 3 and processed by the imaging signal processing section 15 is supplied to an image input/output control section 27.

The image input/output control section 27 controls the transfer of image data in accordance with control exercised by the system controller 10. More specifically, the image input/output control section 27 controls the transfer of image data between an imaging system (imaging signal processing section 15), an imaging monitor/display system (display image processing section 12), a storage section 25, and a communication section 26.

For example, the image input/output control section 27 supplies the image data, which is an imaging signal processed by the imaging signal processing section 15, to the display image processing section 12, storage section 25, or communication section 26.

Further, the image input/output control section 27 supplies the image data reproduced, for instance, from the storage section 25 to the display image processing section 12 or communication section 26.

Furthermore, the image input/output control section 27 supplies the image data received, for instance, by the communication section 26 to the display image processing section 12 or storage section 25.

As components for presenting an image to the user, the image pickup apparatus 1 includes the display sections 2, the display image processing section 12, a display drive section 13, and a display control section 14.

The imaging signal picked up by the image pickup section 3 and processed by the imaging signal processing section 15 can be supplied to the display image processing section 12 through the image input/output control section 27. The display image processing section 12 is a so-called video processor and capable of performing various display processes on the supplied imaging signal. For example, the display image processing section 12 can adjust the luminance level, correct the colors, adjust the contrast, and adjust the sharpness (edge enhancement) of the imaging signal. Further, the display image processing section 12 can perform a process, for instance, for generating an enlarged image by magnifying a part of the imaging signal, generating a reduced image, separating and combining images for displaying segments of picked-up images, generating a character image or imaginary image, or combining a generated image with a picked-up image. In short, the display image processing section 12 can perform various processes on the imaging signal, which is a digital image signal.

The display drive section 13 includes a pixel drive circuit, which receives an image signal from the display image processing section 12 and displays it on the display sections 2, which are liquid-crystal displays. More specifically, the display drive section 13 displays an image by applying a drive signal, which is based on a video signal, to pixels arranged in a matrix format within the display section 2 with predetermined horizontal/vertical drive timing. The display drive section 13 can also make the display sections 2 see-through by controlling the transmittance of each pixel in the display sections 2.

The display control section 14 controls the processing operation of the display image processing section 12 and the operation of the display drive section 13 in accordance with instructions from the system controller 10. More specifically, the display control section 14 causes the display image processing section 12 to perform the above-mentioned processes, and the display drive section 13 to switch between a see-through state and an image display state.

In contrast to the "see-through" state in which the display sections 2 are transparent or semitransparent, the state in which an image is displayed on the display sections 2 is hereinafter referred to as a "monitor display state" (the operation performed to display an image on the display sections 2 is hereinafter referred to as a "monitor display" operation).

The image data reproduced by the storage section 25 and the image data received by the communication section 26 can also be supplied to the display image processing section 12 through the image input/output control section 27. In such an instance, the display image processing section 12 and display drive section 13 operate as described above to output the reproduced image or received image to the display sections 2.

The image pickup apparatus 1 also includes an audio input section 6, an audio signal processing section 16, and an audio output section 5.

The audio input section 6 includes the microphones 6a, 6b shown in FIG. 1, a microphone amplifier section for amplifying an audio signal obtained by the microphones 6a, 6b, and an A/D converter, and outputs audio data.

The audio data obtained by the audio input section 6 is supplied to an audio input/output control section 28.

The audio input/output control section 28 controls the transfer of audio data in accordance with control exercised by the system controller 10. More specifically, the audio input/output control section 28 controls the transfer of an audio signal between the audio input section 6, audio signal processing section 16, storage section 25, and communication section 26.

For example, the audio input/output control section 28 supplies the audio data obtained by the audio input section 6 to the audio signal processing section 16, storage section 25, or communication section 26.

Further, the audio input/output control section 28 supplies the audio data reproduced, for instance, by the storage section 25 to the audio signal processing section 16 or communication section 26.

Furthermore, the audio input/output control section 28 supplies the audio data received, for instance, by the communication section 26 to the audio signal processing section 16 or storage section 25.

The audio signal processing section 16 includes, for instance, a digital signal processor and a D/A converter. The audio data obtained by the audio input section 6 and the audio data fed from the storage section 25 or communication section 26 are supplied to the audio signal processing section 16 through the audio input/output control section 28. The audio signal processing section 16 performs a sound volume adjustment, sound quality adjustment, sound effect control, or other audio process on the supplied audio data in accordance with control exercised by the system controller 10. Further, the audio signal processing section 16 converts the processed audio data to an analog signal and supplies it to an audio output section 5. The audio signal processing section 16 is not limited to a configuration for performing a digital signal process, but may be a configuration for performing a signal process with an analog amplifier and analog filter.

The audio output section 5 includes a pair of earphone speakers 5a, which are shown in FIG. 1, and an amplifier circuit for the earphone speakers 5a.

The audio input section 6, audio signal processing section 16, and audio output section 5 enable the user to listen to external sound, the sound reproduced by the storage section 25, or the sound received by the communication section 26.

The audio output section 5 may be configured as bone-conduction speakers.

The storage section 25 is configured as a section for recording data onto and reproducing data from a predefined recording medium. It may be implemented, for instance, as a HDD (hard disk drive). It goes without saying that a solid-state memory such as a flash memory, a memory card having a built-in solid-state memory, an optical disc, a magnetooptical disc, a hologram memory, or other recording medium may be used. Anyway, the storage section 25 should be configured to be capable of recording and reproducing data in accordance with the employed recording medium.

The image data that is the imaging signal picked up by the image pickup section 3 and processed by the imaging signal processing section 15 and the image data received by the communication section 26 can be supplied to the storage section 25 through the image input/output control section 27. The audio data obtained by the audio input section 6 and the audio data received by the communication section 26 can be supplied to the storage section 25 through the audio input/output control section 28.

The storage section 25 encodes the supplied image data and audio data for the purpose of recording onto a recording medium and records the encoded data onto the recording medium in accordance with control exercised by the system controller 10.

Further, the storage section 25 reproduces the recorded image data and audio data in accordance with control exercised by the system controller 10. The reproduced image data is output to the image input/output control section 27. The reproduced audio data is output to the audio input/output control section 28.

The communication section 26 exchanges data with an external device. As mentioned earlier, the external device may be one of a wide variety of device such as the display unit 30 shown in FIG. 2, a computer, a video device, a cellular phone, a PDA, and a server.

The communication section 26 may be configured to establish network communication, for instance, with a network access point via a short-distance wireless communication link through the use of a wireless LAN, Bluetooth, or other technology, or establish direct wireless communication with an external device having a supported communication function.

The image data that is the imaging signal picked up by the image pickup section 3 and processed by the imaging signal processing section 15 and the image data reproduced by the storage section 25 can be supplied to the communication section 26 through the image input/output control section 27. The audio data obtained by the audio input section 6 and the audio data reproduced by the storage section 25 can be supplied to the communication section 26 through the audio input/output control section 28.

The communication section 26 encodes, modulates, and otherwise processes the supplied image data and audio data for transmission purposes and transmits the processed data to an external device in accordance with control exercised by the system controller 10.

Further, the communication section 26 receives data from the external device. Image data that is received and demodulated is output to the image input/output control section 27. Audio data that is received and demodulated is output to the audio input/output control section 28.

The image pickup apparatus 1 includes an illumination section 4 and an illumination control section 18. The illumination section 4 includes the light-emitting section 4a shown in FIG. 1 and a light-emitting circuit for illuminating the light-emitting section 4a (e.g., LED). The illumination control section 18 causes the illumination section 4 to emit light in accordance with instructions from the system controller 10.

When the light-emitting section 4a of the illumination section 4 is installed so as to illuminate forward as shown in FIG. 1, the illumination section 4 illuminates in the user's gaze direction.

As user information acquisition components, the image pickup apparatus 1 includes a visual sensor 19, an acceleration sensor 20, a gyro 21, and a biological sensor 22.

The visual sensor 19 detects information about the vision of the user. The visual sensor 19 is, for instance, a sensor for detecting the information about the user's vision such as the gaze direction, the focal distance, the opening of a pupil, the fundus pattern, or the motion of an eyelid.

The acceleration sensor 20 and gyro 21 output signals in accordance with the motion of the user. For example, the acceleration sensor 20 and gyro 21 are sensors for detecting, for instance, the motion of a head, the motion of a neck, the motion of the entire body, the motion of an arm, or the motion of a leg.

The biological sensor 22 detects biological information about the user. For example, the biological sensor 22 is a sensor for detecting heartbeat information, pulse information, perspiration information, brain wave information, galvanic skin reflex (GSR) information, body temperature information, blood pressure information, or respiratory activity information. Signals detected by the biological sensor 22 are used as the information, for instance, for judging whether the user is nervous, excited, relaxed, drowsy, comfortable, or uncomfortable.

The visual sensor 19, acceleration sensor 20, gyro 21, biological sensor 22, and input section 17 acquire the information about the motion or physical status of the user who wears the image pickup apparatus 1 (user information) and supply the acquired information to the system controller 10.

The system controller 10 performs a process by exercising the user status judgment function 10a and determines the intention or status of the user in accordance with the acquired user information. In accordance with the determined intention or status of the user, the system controller 10 performs a process by exercising the operational control function 10b and exercises control over image pickup and display operations. More specifically, the system controller 10 instructs the imaging control section 11 to control the operations of the image pickup section 3 and imaging signal processing section 15 and instructs the display control section 14 to control the operations of the display image processing section 12 and display drive section 13.

Although the visual sensor 19, acceleration sensor 20, gyro 21, and biological sensor 22 are enumerated as the user information acquisition components, it is not always necessary to furnish all of these components. Further, other sensors such as a sensor for detecting the voice of the user or the lip movement of the user may be furnished.

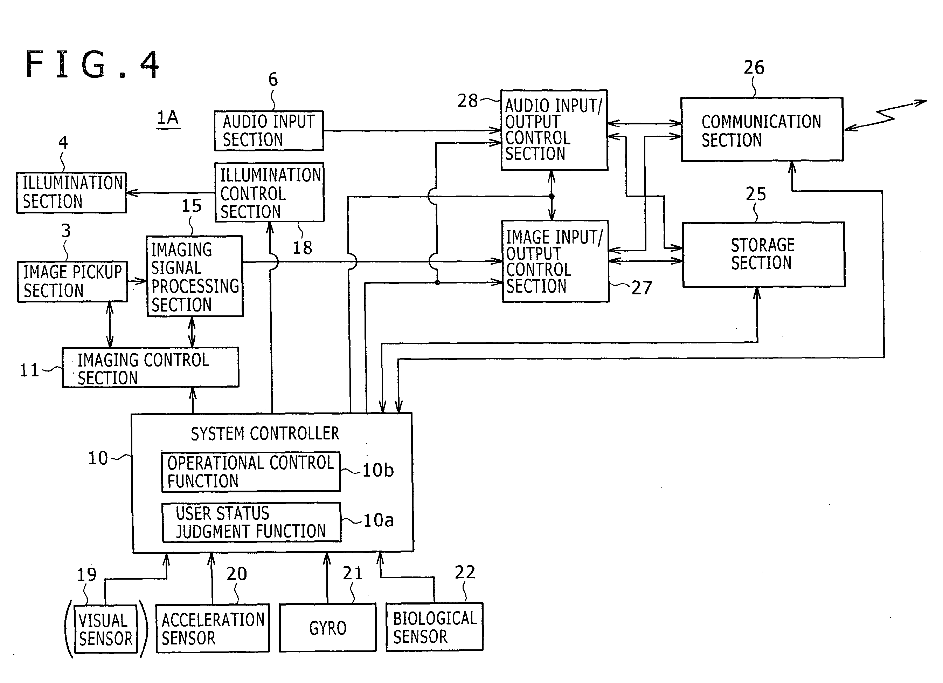

FIG. 4 shows a typical configuration of the image pickup apparatus 1A that is without the monitor display function and shown in FIG. 2. Blocks having the same functions as the counterparts shown in FIG. 3 are assigned the same reference numerals and not repeatedly described.

The configuration shown in FIG. 4 is obtained by removing the display sections 2, display image processing section 12, display drive section 13, display control section 14, audio signal processing section 16, and audio output section 5 from the configuration shown in FIG. 3.

For example, the image data that is the imaging signal picked up by the image pickup section 3 and processed by the imaging signal processing section 15 and the image data received by the communication section 26 can be supplied to the storage section 25 through the image input/output control section 27. The audio data obtained by the audio input section 6 and the audio data received by the communication section 26 can be supplied to the storage section 25 through the audio input/output control section 28.

The storage section 25 encodes the supplied image data and audio data for the purpose of recording onto a recording medium and records the encoded data onto the recording medium in accordance with control exercised by the system controller 10.

Further, the storage section 25 reproduces the recorded image data and audio data in accordance with control exercised by the system controller 10. The reproduced image data is output to the image input/output control section 27. The reproduced audio data is output to the audio input/output control section 28.

The image data that is the imaging signal picked up by the image pickup section 3 and processed by the imaging signal processing section 15 and the image data reproduced by the storage section 25 can be supplied to the communication section 26 through the image input/output control section 27. The audio data obtained by the audio input section 6 and the audio data reproduced by the storage section 25 can be supplied to the communication section 26 through the audio input/output control section 28.

The communication section 26 encodes, modulates, and otherwise processes the supplied image data and audio data for transmission purposes and transmits the processed data to an external device in accordance with control exercised by the system controller 10. When, for instance, the image data that is the imaging signal picked up by the image pickup section 3 and processed by the imaging signal processing section 15 is transmitted to the display unit 30 shown in FIG. 2, the display unit 30 can be used to monitor the picked-up image.

Further, the communication section 26 receives data from the external device. Image data that is received and demodulated is output to the image input/output control section 27. Audio data that is received and demodulated is output to the audio input/output control section 28.

The configuration shown in FIG. 4 also includes the visual sensor 19, acceleration sensor 20, gyro 21, and biological sensor 22 as the user information acquisition components. When a mounting frame structure shown in FIG. 2 is employed so that a housing unit is positioned over a temporal region when the user wears the image pickup apparatus 1A, it is difficult to furnish the visual sensor 19, which detects the information about the user's vision. However, if an eyeglass-type mounting frame structure is employed, the visual sensor 19 for imaging the user's eye can be furnished.

Even when the above configuration is employed, other sensors such as a sensor for detecting the user's voice or lip movement may be furnished.

### 3. Typical Picked-Up Images

In the image pickup apparatus 1 (1A) according to the present embodiment, the system controller 10 exercises image pickup control in accordance with the intention or status of the user to achieve precise image pickup without prompting the user to operate keys, dials, or other operating controls.

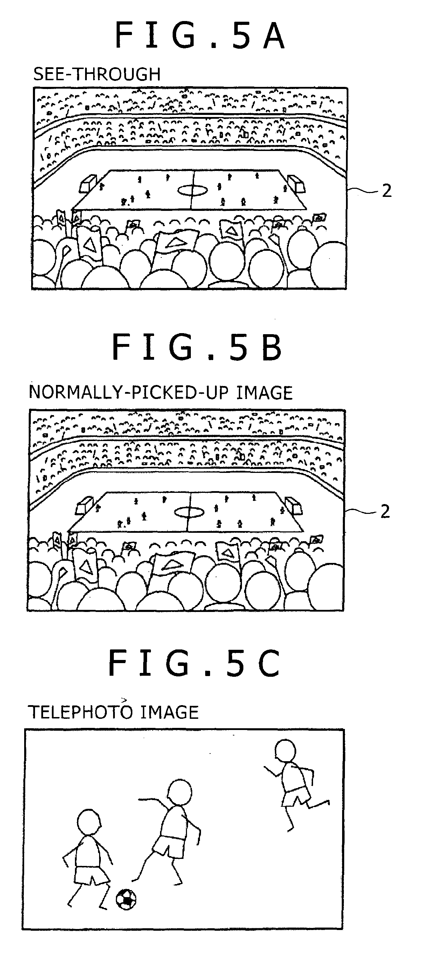

FIGS. 5 to 9 show various examples of picked-up images.

FIG. 5A shows a case where the display sections 2 of the image pickup apparatus 1 shown in FIG. 1 (FIG. 3) are rendered see-through (shows a scene visible to the user through the display sections 2). More specifically, the display sections 2 are merely transparent plates so that the user views a visible scene through the transparent display sections 2.

FIG. 5B shows a monitor display state in which the image picked up by the image pickup section 3 is displayed on the display sections 2. This figure shows a case where the image pickup section 3, imaging signal processing section 15, display image processing section 12, and display drive section 13 operate in the state shown in FIG. 5A to display a picked-up image on the display sections 2 normally. In this case, the picked-up image (normally-picked-up image) displayed on the display sections 2 is virtually the same as the image obtained in the see-through state. In other words, the user views picked-up image that represents a normal view.

FIG. 5C shows an example of a picked-up image that is obtained when the system controller 10 controls the image pickup section 3 via the imaging control section 11 to pick up an image in telephoto mode. When, for instance, an image is picked up in telephoto mode, the user can view a telephoto image on the display sections 2 shown in FIG. 1 or on the display unit 30 shown in FIG. 2. The obtained telephoto image can be recorded in the storage section 25 or transmitted by the communication section 26 to an external device for storage purposes.

On the contrary, when the system controller 10 controls the image pickup section 3 via the imaging control section 11 to pick up an image in wide-angle mode, the display sections 2 display a wide-angle image that represents a short-distance view. Telephoto/wide-angle control can be provided by causing the image pickup section 3 to exercise zoom lens drive control or by causing the imaging signal processing section 15 to perform a signal process.

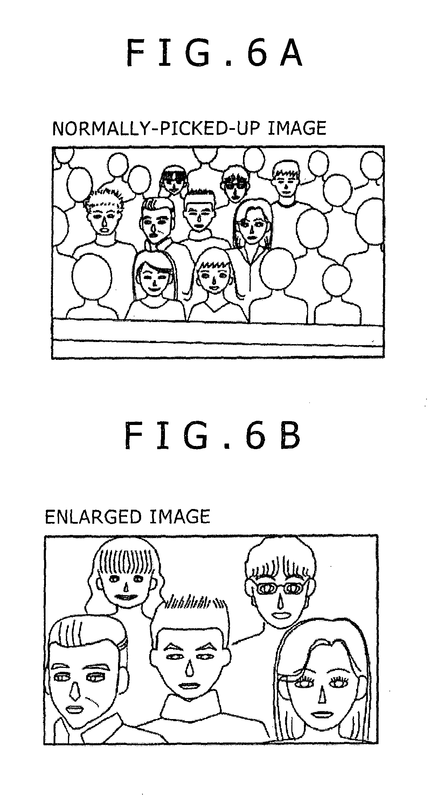

FIG. 6A shows an image that was picked up normally. FIG. 6B shows an enlarged image. An enlarged image that looks like FIG. 6B is obtained when the system controller 10 instructs the imaging signal processing section 15 via the imaging control section 11 to perform an image enlargement process.

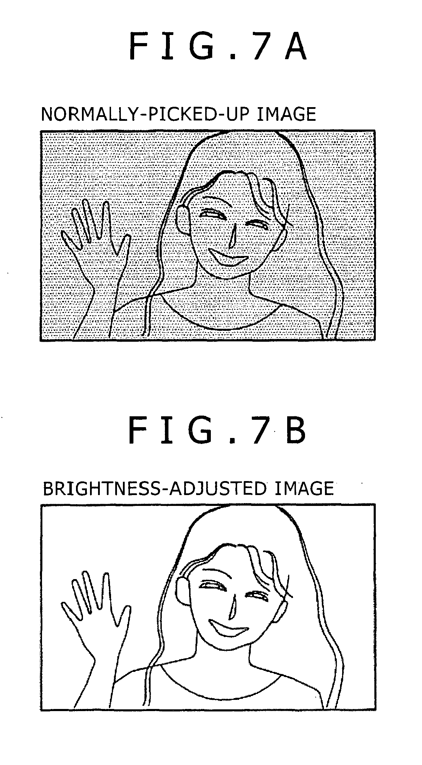

FIG. 7A shows an image that was picked up normally. However, this image is dark particularly due to a dim surrounding area.

In the above instance, the system controller 10 can obtain a clearer, brighter picked-up image as shown in FIG. 7B by instructing the imaging control section 11 (image pickup section 3 and imaging signal processing section 15) to raise the imaging sensitivity or by issuing instructions for adjusting the luminance level, contrast, and sharpness in an imaging signal process. In this situation, satisfactory results can also be obtained by causing the illumination section 4 to perform an illuminating operation.

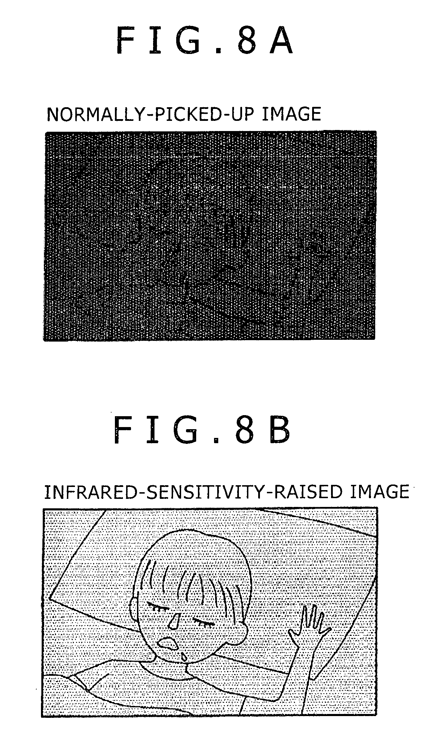

FIG. 8A shows an image that was picked up normally while the user was in a bedroom where a child was sleeping. In this case, the normally-picked-up image does not clearly indicate the figure, for instance, of the child because the child was in a dark room.

In the above instance, the system controller 10 can obtain an infrared image, which looks like FIG. 8B, by instructing the imaging control section 11 (image pickup section 3 and imaging signal processing section 15) to raise infrared imaging sensitivity. The obtained infrared image allows the user to confirm the sleeping face of the child in a dark room.

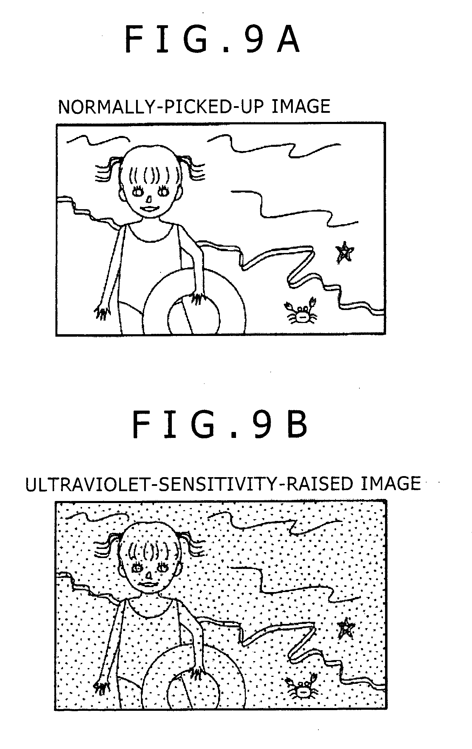

FIG. 9A shows an image that was picked up normally. However, the picked-up image can be changed to represent an ultraviolet light component as shown in FIG. 9B when the system controller 10 instructs the imaging control section 11 (image pickup section 3 and imaging signal processing section 15) to raise ultraviolet imaging sensitivity.

Although various picked-up image examples are presented above, they are intended to be illustrative only. The present embodiment makes it possible to obtain picked-up images in various modes by controlling the processes and operations of the image pickup section 3 and imaging signal processing section 15.

A great variety of modes can be used to obtain various picked-up images, including telephoto images, wide-angle images, images obtained by performing zoom-in or zoom-out between telephoto and wide-angle, enlarged images, reduced images, images obtained at various frame rate settings (e.g., images picked up at a high frame rate and at a low frame rate), high-luminance images, low-luminance images, images obtained at various contrast settings, images obtained at various sharpness settings, images obtained with imaging sensitivity raised, images obtained with infrared imaging sensitivity raised, images obtained with ultraviolet imaging sensitivity raised, images obtained with a specific wavelength band cut off, images to which image effects (e.g., mosaic, luminance inversion, soft focus, partial highlighting, overall color atmosphere changes) are applied, and still images.

### 4. User Status Judgment

As described above, the image pickup apparatus 1 (1A) according to the present embodiment includes the visual sensor 19, acceleration sensor 20, gyro 21, and biological sensor 22 as the user information acquisition components.

The visual sensor 19 detects the information about the user's vision. For example, the visual sensor 19 may be formed by the image pickup section that is positioned near the display sections 2 of the image pickup apparatus 1 shown in FIG. 1 to pick up an image of the user's eye. The system controller 10 can then acquire the image of the user's eye, which is picked up by the image pickup section, and exercise the user status judgment function 10a to analyze the acquired image and detect, for instance, the gaze direction, the focal distance, the opening of a pupil, the fundus pattern, and an eyelid open/close operation, thereby judging the intention and status of the user accordingly.

Alternatively, the visual sensor 19 may be formed by a light-emitting section, which is positioned near the display sections 2 to emit light toward the user's eye, and a light-receiving section, which receives light reflected from the eye. The focal distance of the user's eye can be detected, for instance, by detecting the thickness of the lens of the user's eye from a received light signal.

When the user's gaze direction is detected, the system controller 10 can note, for instance, the image displayed on the display sections 2 and locate a spot in which the user is interested.

The system controller 10 can also recognize the user's gaze direction as an operating control input. When, for instance, the user' gaze direction changes to the left and to the right, it can be recognized as a predefined operating control input that prompts the image pickup apparatus 1 to perform a particular operation.

When the user's focal distance is detected, it is possible to judge whether the user is interested in a short- or long-distance view. Zoom control, enlargement/reduction control, or other appropriate control can be exercised in accordance with the judgment result. If, for instance, the user is interested in a long-distance view, a telephoto image pickup operation can be performed.

When the opening of a user's pupil is detected, it is possible to judge the brightness of a surrounding area in the see-through state or the dazzle of a displayed image in the monitor display state. Luminance, imaging sensitivity, or other adjustments can be made in accordance with the judgment result.

When the user's fundus pattern is detected, it can be used, for instance, for personal authentication of the user. Every person has a unique fundus pattern. Therefore, it is possible to identify the user wearing the image pickup apparatus by the detected fundus pattern and provide control appropriate for the user or exercise control so as to permit only a particular user to perform an image pickup operation.

When a user's eyelid open/close operation is detected, it is possible to judge the dazzle felt by the user or the eye fatigue. The eyelid open/close operation can also be recognized as a user's intentional operating control input. When, for instance, the user blinks his/her eyes three times in succession, it can be judged as a predetermined operating control input.

The acceleration sensor 20 and gyro 21 output signals according to the motion of the user. For example, the acceleration sensor 20 is suitable for detecting a linear motion, whereas the gyro 21 is suitable for detecting a rotary motion or vibration.

The acceleration sensor 20 and gyro 21 can detect the overall motion of the user's body or the motions of various parts of the user's body depending on the locations of the acceleration sensor 20 and gyro 21.

When, for instance, the acceleration sensor 20 and gyro 21 are mounted inside the eyeglass-type image pickup apparatus 1 shown in FIG. 1, that is, when the acceleration sensor 20 and gyro 21 are employed to detect the motion of the user's head, the information supplied from the acceleration sensor 20 is used as acceleration information about the motion of the user's head or entire body, whereas the information supplied from the gyro 21 is used as angular velocity or vibration information about the motion of the user's head or entire body.

The user's behavior in which the user moves his/her neck and head can then be detected. For example, it is possible to judge whether the user is facing upward or downward. If the user is facing downward, it can be judged that the user is reading a book or viewing a near object. If, on the contrary, the user is facing upward, it can be judged that the user is viewing a far object.

When the system controller 10 detects a behavior in which the user moves his/her neck and head, such a behavior can be recognized as an intentional operation of the user. If, for instance, the user shakes his/her neck twice to the left, the system controller 10 recognizes it as a predefined operating control input.

Further, the acceleration sensor 20 and gyro 21 may be used, for instance, to judge whether the user is at a standstill (not walking), walking, or running. The acceleration sensor 20 and gyro 21 may also be used, for instance, to detect that the user has seated himself/herself from a standing position or has stood up.

Furthermore, if the acceleration sensor 20 and gyro 21 are separate from the mounting unit, which is mounted on the user's head, and attached to an arm or foot, the behavior of the arm or foot can also be detected.

The biological sensor 22 detects the biological information about the user such as heartbeat information (heart rate), pulse information (pulse rate), perspiration information, brain wave information (e.g., information about the α wave, β wave, θ wave, and δ wave), galvanic skin reflex information, body temperature information, blood pressure information, or respiratory activity information (e.g., breathing speed, breathing depth, and tidal volume). The system controller 10 can use these items of information to judge whether the user is nervous, excited, relaxed mentally, comfortable, or uncomfortable.

The biological information can also be used to detect whether the image pickup apparatus 1 is mounted on the user. For example, when the image pickup apparatus 1 is not mounted on the user, the system controller 10 may exercise control so as to invoke a standby state in which only the biological information is to be detected. When the detected biological information indicates that the image pickup apparatus 1 is mounted on the user, the system controller 10 may turn on the power. When, on the contrary, the image pickup apparatus 1 is demounted from the user, the system controller 10 may exercise control so as to invoke the standby state.

Further, the information detected by the biological sensor 22 can be used for personal authentication of the user (for identification of the person who wears the image pickup apparatus 1).

The biological sensor 22 may be mounted inside the mounting frame, for instance, of an eyeglass-type image pickup apparatus 1 and positioned over the user's temporal or occipital region to detect the aforementioned information, or separated from the mounting frame of the image pickup apparatus 1 (or 1A) and attached to a predetermined part of the user's body.

### 5. Examples of Various Operations

The image pickup apparatus 1 (1A) according to the present embodiment picks up an appropriate image in accordance with the intention or status of the user because the system controller 10 controls an image pickup operation in accordance with the user information detected by the visual sensor 19, acceleration sensor 20, gyro 21, and biological sensor 22 as described above.

Various typical operations that are performed in accordance with control exercised by the system controller 10 to achieve the above purpose will now be described.

In the image pickup apparatus 1 (1A), the image pickup processing system (image pickup section 13, imaging signal processing section 15, and imaging control section 11) may constantly perform an image pickup operation or start an image pickup operation when an imaging start trigger is generated while the power is on.

In other words, power-on control and imaging start control may be exercised at the same time or at different times. If, for instance, a process for causing the system controller 10 to turn on the power is performed after detecting that the image pickup apparatus 1 is mounted on the user as described above, an image pickup operation may be started when a predefined imaging start trigger is generated subsequently to power-on.

Alternatively, the system controller 10 may turn on the apparatus and start an image pickup operation when a predefined imaging start trigger is detected.

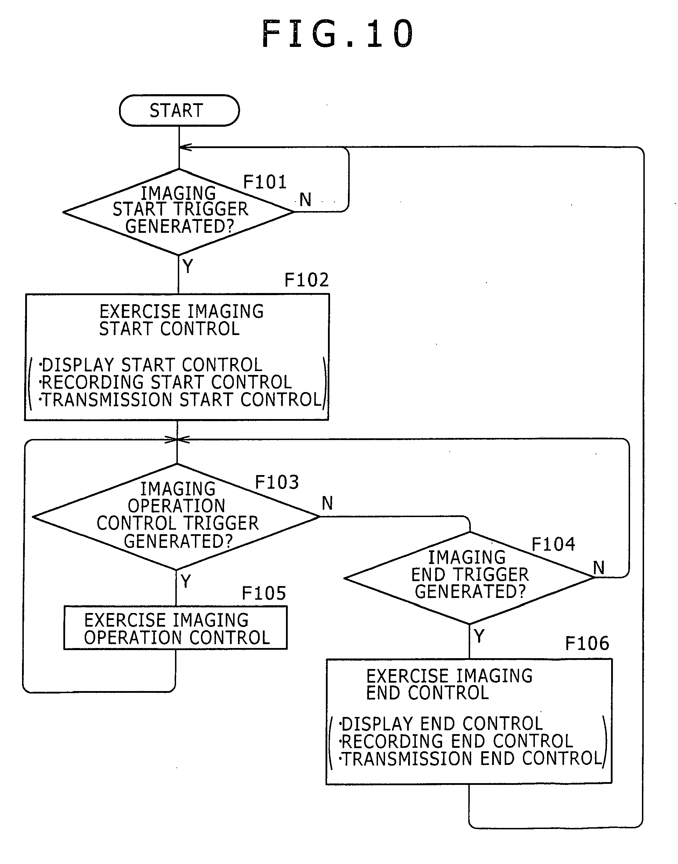

First of all, typical control processes that the system controller 10 performs by exercising the operational control function 10b will be described with reference to FIGS. 10 to 12.

FIG. 10 shows an example in which some or all of a monitor display operation, a recording operation in the storage section 25, and a transmission operation of the communication section 26 are simultaneously performed during an image pickup operation.

In the image pickup apparatus 1 shown in FIG. 1, the monitor display operation is an operation that is performed to display a picked-up image on the display sections 2. In the image pickup apparatus 1A shown in FIG. 2, on the other hand, the monitor display operation is an operation that is performed to transmit picked-up image data from the communication section 26 to the display unit 30 and make the display unit 30 ready to exercise the monitor display function.

The transmission operation of the communication section 26, which will be described below, is an operation that is performed to transmit image data and audio data, which are in the form of an imaging signal, to the aforementioned various external devices as well as to the display unit 30. How the image data and audio data will be processed by a transmission destination device (e.g., displayed with an audio output generated, recorded, or transferred or distributed to the other devices) depends on the transmission destination device.

In step F101, which is shown in FIG. 10, the system controller 10 judges whether an imaging start trigger is generated. The imaging start trigger is generated when the system controller 10 decides to start an image pickup operation in accordance with the intention or status of the user, which is indicated by the user status judgment function 10a. The system controller 10 examines a user's conscious operation, a user's unconscious operation, or a user's condition (e.g., a user's physical status or personal recognition) to judge whether the imaging start trigger is generated. Concrete examples will be described later.

If the judgment result obtained in step F101 indicates that the imaging start trigger is generated, the system controller 10 proceeds to step F102 and exercises imaging start control. More specifically, the imaging control section 11 issues an imaging start instruction to let the image pickup section 3 and imaging signal processing section 15 perform a normal image pickup operation.

In the above instance, the system controller 10 also exercises some or all of display start control, recording start control, and transmission start control.

In the image pickup apparatus 1 shown in FIGS. 1 and 3, display start control is exercised so that the display control section 14 is instructed to let the display image processing section 12 and display drive section 13 display a picked-up image on the display sections 2 in a normally-picked-up image mode. In the image pickup apparatus 1A shown in FIGS. 2 and 4, on the other hand, display start control is exercised so that the communication section 26 transmits picked-up image data and audio data to the display unit 30, which is external to the image pickup apparatus 1A.

Recording start control is exercised so that the storage section 25 starts recording the prcked-up image data and audio data.

Transmission start control is exercised so that the communication section 26 starts transmitting the picked-up image data and audio data to an external device.

After the start of an image pickup operation, the system controller 10 performs step F103 to monitor whether an imaging operation control trigger is generated, and performs step F104 to monitor whether an imaging end trigger is generated.

The imaging operation control trigger is generated when the system controller 10 decides to change the image pickup operation mode in accordance with the intention or status of the user, which is judged by the user status judgment function 10a. The imaging end trigger is generated when the system controller 10 decides to terminate the image pickup operation in accordance with the intention or status of the user, which is judged by the user status judgment function 10a. The system controller 10 examines a user's conscious operation or a user's unconscious operation and status (e.g., a user's physical status or personal recognition) to judge whether the imaging end trigger is generated. Concrete examples will be described later.

If it is judged that the imaging operation control trigger is generated, the system controller 10 proceeds from step F103 to step F105 and exercises image pickup operation control. More specifically, the system controller 10 instructs the imaging control section 11 to perform an image pickup operation in a mode appropriate for the current intention or status of the user.

After step F105 is performed to exercise image pickup operation mode control, steps F103 and F104 are performed to monitor whether a trigger is generated.

If it is judged that the imaging end trigger is generated, the system controller 10 proceeds from step F104 to step F106 and exercises imaging end control.
More specifically, the system controller 10 instructs the imaging control section 11 to terminate the image pickup operation of the image pickup section 3 and imaging signal processing section 15.

In the above instance, the system controller 10 also exercises some or all of display end control, recording end control, and transmission end control.

More specifically, if a monitor display operation was started in step F102, such an operation is terminated. If a recording operation was started, the recording operation in the storage section 25 is terminated. If a transmission operation was started, the transmission operation of the communication section 26 is terminated.

Eventually, the system controller returns to step F101.

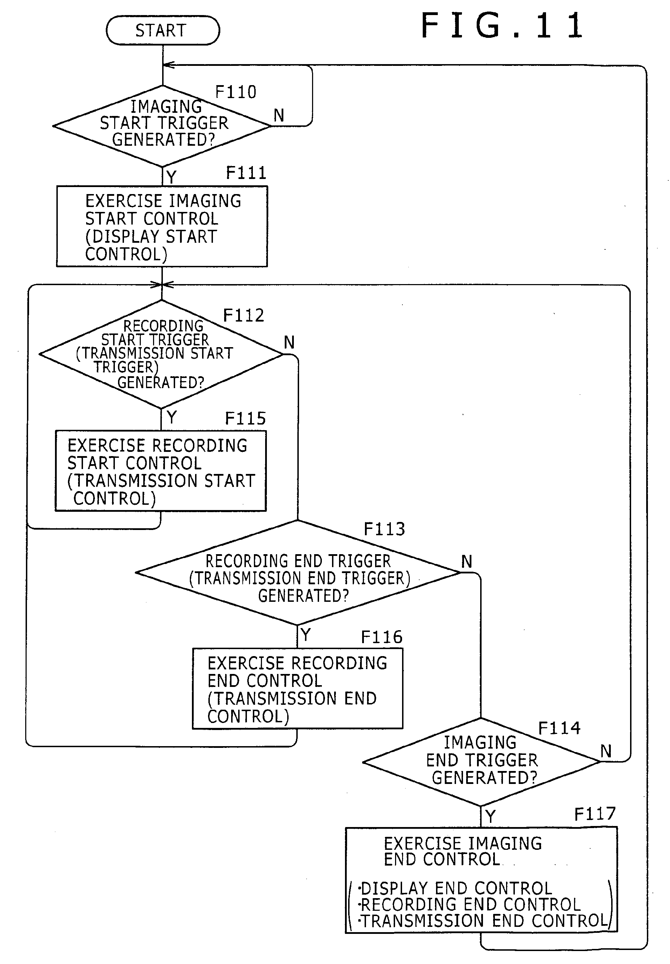

FIG. 11 shows an example in which the execution timing for a recording operation in the storage section 25 and a transmission operation of the communication section 26 is controlled in addition to the execution timing for an image pickup operation. The details of imaging start control, imaging end control, display start control, display end control, recording start control, recording end control, transmission start control, and transmission end control are the same as described with reference to FIG. 10.

In step F110, which is shown in FIG. 11, the system controller 10 checks whether the imaging start trigger is generated.

If it is judged that the imaging start trigger is generated, the system controller 10 proceeds to step F111 and exercises imaging start control. In this instance, the system controller 10 also exercises display start control.

After the start of an image pickup operation, the system controller 10 performs step F112 to monitor whether a recording start trigger (or a transmission start trigger) is generated, performs step F113 to monitor whether a recording end trigger (or a transmission end trigger) is generated, and performs step F114 to monitor whether an imaging end trigger is generated.

The recording start trigger is generated when the system controller 10 decides to start a recording operation in the storage section 25 in accordance with the intention or status of the user, which is judged by the user status judgment function 10a.

The recording end trigger is generated when the system controller 10 decides to terminate a recording operation in the storage section 25 in accordance with the intention or status of the user, which is judged by the user status judgment function 10a.

The transmission start trigger is generated when the system controller 10 decides to start a transmission operation of the communication section 26 in accordance with the intention or status of the user, which is judged by the user status judgment function 10a.

The transmission end trigger is generated when the system controller 10 decides to terminate a transmission operation of the communication section 26 in accordance with the intention or status of the user, which is judged by the user status judgment function 10a.

As regards the image pickup apparatus 1A shown in FIGS. 2 and 4, for example, exercising display start control in step F111 corresponds to exercising transmission start control to let the communication section 26 transmit data to the display unit 30. Therefore, the generation of the transmission start trigger or transmission end trigger is a process that is performed on the assumption that the image pickup apparatus 1 shown in FIGS. 1 and 3 is used. However, if it is assumed that data is transmitted to an external device other than the monitoring display unit 30 during the use of the image pickup apparatus 1A shown in FIGS. 2 and 4, the transmission start trigger and transmission end trigger can be regarded as transmission control triggers for such a transmission.

If it is judged that the recording start trigger is generated, the system controller 10 proceeds from step F112 to step F115 and exercises control to let the storage section 25 start recording picked-up image data and audio data.

Even if it is judged that the transmission start trigger is generated, the system controller 10 proceeds from step F112 to step F115 and exercises control to let the communication section 26 start transmitting picked-up image data and audio data to an external device.

After recording start control or transmission start control is exercised, the system controller 10 returns to a trigger monitoring loop in steps F112, F113, and F114.

If it is judged that the recording end trigger is generated, the system controller 10 proceeds from step F113 to step F116 and exercises control to terminate the recording operation in the storage section 25.

Even if it is judged that the transmission end trigger is generated, the system controller 10 proceeds from step F113 to step F116 and exercises control so that the communication section 26 finishes transmitting picked-up image data and audio data to the external device.

After recording end control or transmission end control is exercised, the system controller 10 returns to a trigger monitoring loop in steps F112, F113, and F114.

If it is judged that the imaging end trigger is generated, the system controller 10 proceeds from step F114 to step F117 and exercises imaging end control.
More specifically, the system controller 10 instructs the imaging control section 11 to terminate the image pickup operation of the image pickup section 3 and imaging signal processing section 15. In this instance, the system controller 10 also exercises display end control.

If the recording operation and transmission operation are not terminated when the imaging end trigger is generated, the system controller 10 exercises recording end control and transmission end control.

Eventually, the system controller 10 returns to step F110.

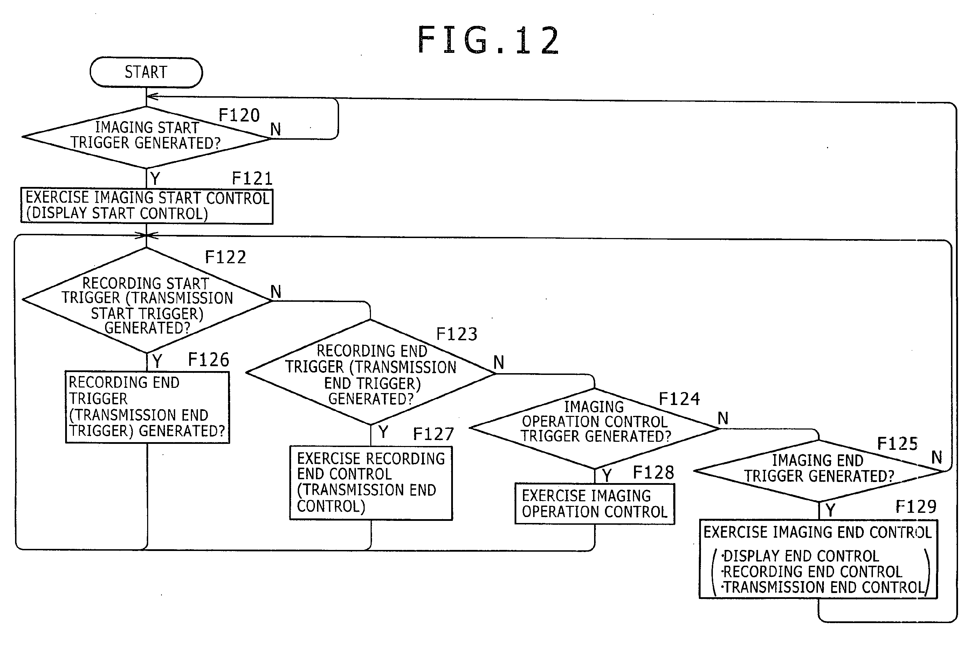

FIG. 12 shows an example in which the execution timing for a recording operation in the storage section 25 and a transmission operation of the communication section 26 is controlled in addition to the execution timing for an image pickup operation, and image pickup operation mode control is exercised as well. The details of imaging start control, imaging end control, display start control, display end control, recording start control, recording end control, transmission start control, and transmission end control are the same as described with reference to FIGS. 10 and 11.

In step F120, which is shown in FIG. 12, the system controller 10 checks whether the imaging start trigger is generated.

If it is judged that the imaging start trigger is generated, the system controller 10 proceeds to step F121 and exercises imaging start control. In this instance, the system controller 10 also exercises display start control.

After the start of an image pickup operation, the system controller 10 performs step F122 to monitor whether the recording start trigger (or the transmission start trigger) is generated, performs step F123 to monitor whether the recording end trigger (or the transmission end trigger) is generated, performs step F124 to monitor whether the imaging operation control trigger is generated, and performs step F125 to monitor whether the imaging end trigger is generated.

If it is judged that the recording start trigger is generated, the system controller 10 proceeds from step F122 to step F126 and exercises control to let the storage section 25 start recording picked-up image data and audio data.

Even if it is judged that the transmission start trigger is generated, the system controller 10 proceeds from step F122 to step F126 and exercises control to let the communication section 26 start transmitting picked-up image data and audio data to an external device.

After recording start control or transmission start control is exercised, the system controller 10 returns to a trigger monitoring loop in steps F122, F123, F124, and F125.

If it is judged that the recording end trigger is generated, the system controller 10 proceeds from step F123 to step F127 and exercises control to terminate the recording operation in the storage section 25.

Even if it is judged that the transmission end trigger is generated, the system controller 10 proceeds from step F123 to step F127 and exercises control so that the communication section 26 finishes transmitting picked-up image data and audio data to the external device.

After recording end control or transmission end control is exercised, the system controller 10 returns to a trigger monitoring loop in steps F122, F123, F124, and F125.

If it is judged that the imaging operation control trigger is generated, the system controller 10 proceeds from step F124 to step F128 and exercises image pickup operation control. More specifically, the system controller 10 instructs the imaging control section 11 to perform an image pickup operation in a mode appropriate for the current intention or status of the user.

After image pickup operation mode control is exercised in step F128, the system controller 10 returns to a trigger monitoring loop in steps F122, F123, F124, and F125.

If it is judged that the imaging end trigger is generated, the system controller 10 proceeds from step F125 to step F129 and exercises imaging end control. More specifically, the system controller 10 instructs the imaging control section 11 to terminate the image pickup operation of the image pickup section 3 and imaging signal processing section 15. In this instance, the system controller 10 also exercises display end control.

If the recording operation and transmission operation are not terminated when the imaging end trigger is generated, the system controller 10 exercises recording end control and transmission end control.

Eventually, the system controller 10 returns to step F120.

The system controller 10 exercises its operational control function 10b to perform the processing steps shown in FIG. 10, 11, or 12 and provide imaging start/end control, image pickup operation mode selection control, recording start/end control, and transmission start/end control.

The foregoing description assumes that imaging start/end control and display start/end control are exercised at the same time. However, when the display sections 2 are positioned immediately before the eyes as shown in FIGS. 1 and 3, a monitor display operation may not always be performed during an image pickup operation. For example, control may be exercised to place the display sections 2 in the see-through state depending on the intention or status of the user. In the process examples shown in FIGS. 11 and 12, for instance, execution control for an image pickup operation and execution control for a recording or transmission operation are exercised at different times. However, as is the case with the recording or transmission operation, execution control for a monitor display operation may be exercised to formulate judgments about a monitor display start trigger and monitor display end trigger.

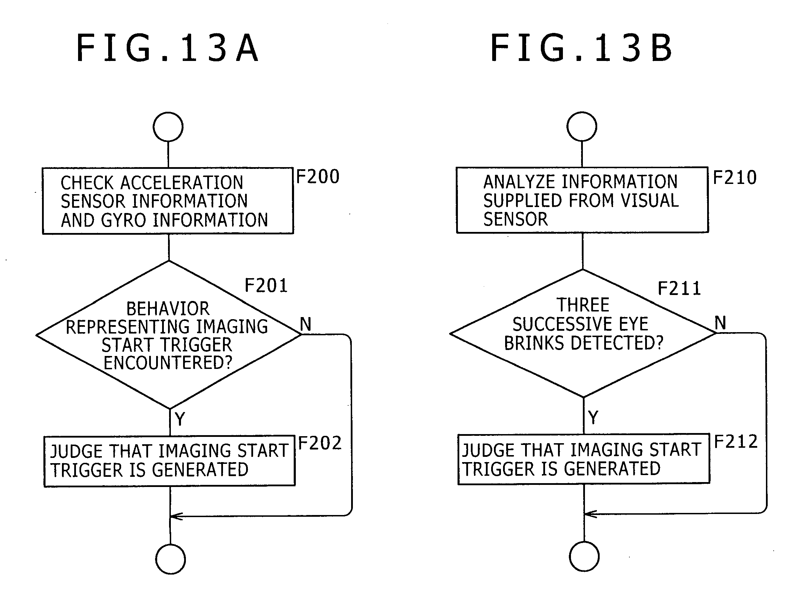

In the processes shown in FIGS. 10, 11, and 12, control is exercised in accordance with judgments about the imaging start trigger, imaging operation control trigger, imaging end trigger, recording start trigger, recording end trigger, transmission start trigger, and transmission end trigger. Concrete examples of such trigger judgments and control operations will be described below with reference to FIGS. 13 and beyond.

FIGS. 13 to 20 show typical processes that are performed by the user status judgment function 10a of the system controller 10. It is assumed that such typical processes are performed in parallel with a process that is performed by the operational control function 10b as shown in FIG. 10, 11, or 12. Parallel processing is such that detection processes shown in FIGS. 13 to 20 are periodically performed as interrupt processes while, for instance, the system controller 10 performs the process shown in FIG. 10. Programs for performing the processes shown in FIGS. 13 to 20 may be incorporated in a program that performs a process shown in FIG. 10, 11, or 12 or may be provided as separate programs that are recalled on a periodic basis. The forms of these programs are not limited.

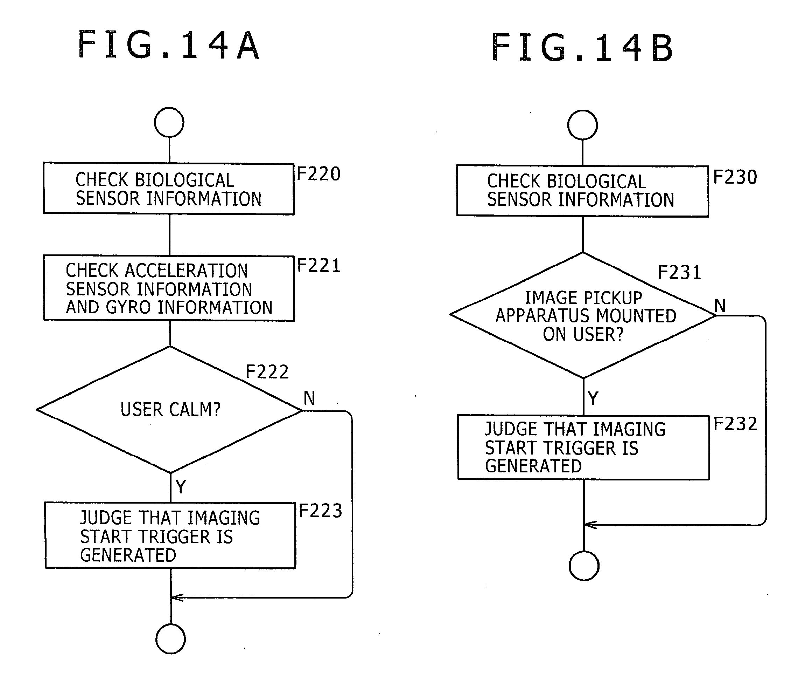

First of all, typical imaging start trigger judgments will be described with reference to FIGS. 13 and 14.

FIGS. 13A and 13B show examples in which a user's behavior is detected as the imaging start trigger.

In step F200, which is shown in FIG. 13A, the system controller 10 performs a process for monitoring the information (acceleration signal and angular velocity signal) detected by the acceleration sensor 20 and gyro 21.

It is assumed, for instance, that shaking the head twice vertically, shaking the head once to the right and left, rotating the head one turn, or other specific motion is defined as a user demand for the start of an image pickup operation. If the information detected by the acceleration sensor 20 or gyro 21 (or by both of them) causes the system controller 10 to find that the intention of starting an image pickup operation is indicated by a particular user motion, the system controller 10 proceeds from step F201 to step F202 and judges that the imaging start trigger is generated.

When it is judged in step F202 that the imaging start trigger is generated, as described above, the process shown in FIG. 10 proceeds from step F101 to step F102 (the process shown in FIG. 11 proceeds from step F110 to step F111 and the process shown in FIG. 12 proceeds from step F120 to step F121), and the system controller 10 instructs the imaging control section 11 to start an image pickup operation.

Jumping, shaking a hand, swinging an arm or leg, or other specific user behavior is conceivable as a motion for demanding a monitor display operation, which is to be detected in accordance with the information supplied from the acceleration sensor 20 and gyro 21.

FIG. 13B shows an example in which the judgment about the imaging start trigger is formed in accordance with the information supplied from the visual sensor 19.

In step F210, the system controller 10 analyzes the information supplied from the visual sensor 19. If, for instance, an image pickup section for imaging the user's eye is furnished as the visual sensor 19, the system controller 10 analyzes the image picked up by such an image pickup section.

If, for instance, a sequence of three successive eye blinks is defined as a user demand for the start of an image pickup operation, the system controller 10 performs an image analysis to monitor for such a behavior.

When the system controller 10 detects that the user has blinked his/her eyes three times in succession, the system controller 10 proceeds from step F211 to step F212 and judges that the imaging start trigger is generated.

When it is judged in step F212 that the imaging start trigger is generated, the system controller 10 instructs the imaging control section 11 to start an image pickup operation in step F103 in FIG. 10 (or in step F111 in FIG. 11 or in step F121 in FIG. 12).

Rotating the eyeballs, moving the eyeballs twice to the right and left or up and down, or other specific user behavior is conceivable as a motion for demanding a monitor display operation, which is to be detected in accordance with the information supplied from the visual sensor 19.

FIG. 14A shows an example in which the judgment about the imaging start trigger is formed in accordance with an unconscious behavior or physical status of the user.

In step F220, the system controller 10 checks the brain wave information, heart rate information, perspiration amount information, blood pressure information, or other information supplied from the biological sensor 22.

In step F221, the system controller 10 performs a process for monitoring the information (acceleration signal and angular velocity signal) detected by the acceleration sensor 20 and gyro 21.

In step F222, the system controller 10 examines the information supplied from the biological sensor 22 and the user behavior, and judges whether the user is calm, nervous, excited, or interested in a certain event. A transition from a calm state is judged in accordance, for instance, with a change in the perspiration status, heart rate, pulse rate, brain wave, blood pressure, or other detected biological value or a change in the detected acceleration value or vibration value, which is caused by a sudden neck orientation change, running, jumping, or other unexpected behavior.

When the system controller 10 judges that the user is no longer calm, the system controller 10 proceeds from step F222 to step F223 and judges that the imaging start trigger is generated.

When it is judged in step F223 that the imaging start trigger is generated, as described above, the system controller 10 instructs the imaging control section 11 to start an image pickup operation in step F103 in FIG. 10 (or in step F111 in FIG. 11 or in step F121 in FIG. 12).

When the psychological or physical status of the user deviates from normal, an image pickup operation automatically starts.

Various other processes for forming the judgment about the imaging start trigger in accordance with an unconscious behavior or physical status of the user are conceivable.

For example, the information supplied from the visual sensor 19 when the user's gaze direction is suddenly changed may be used to judge that the imaging start trigger is generated. Further, the sound input from the audio input section 6 may be used to judge whether the imaging start trigger is generated.

FIG. 14B shows an example in which the imaging start trigger is generated when the user wears the image pickup apparatus 1 (1A).

In step F230, the system controller 10 checks the brain wave, heart rate, galvanic skin reflex, or other information supplied from the biological sensor 22.

In step F231, the system controller 10 judges in accordance with the information supplied from the biological sensor 22 whether the image pickup apparatus 1 (1A) is mounted on the user. Whether the image pickup apparatus 1 (1A) is mounted on the user can be determined by checking whether biological information can be obtained from the biological sensor 22.

When it is judged that the image pickup apparatus 1 (1A) is mounted on the user, the system controller 10 proceeds from step F231 to step F232 and concludes that the imaging start trigger is generated.

When it is concluded in step F232 that the imaging start trigger is generated, as described above, the system controller 10 instructs the imaging control section 11 to start an image pickup operation in step F103 in FIG. 10 (or in step F111 in FIG. 11 or in step F121 in FIG. 12).

Since the reaction, for instance, of the biological sensor 22 can be used as described above to detect whether the image pickup apparatus 1 (1A) is mounted on the user, it is considered that the imaging start trigger is generated when the biological sensor 22 starts detecting a pulse rate, brain wave, galvanic skin reflex, or other biological reaction. This makes it possible to exercise operational control so that an image pickup operation is performed while the image pickup apparatus 1 (1A) is mounted on the user.

Control can also be exercised so as to start an image pickup operation when the image pickup apparatus 1 (1A) is mounted on a particular user. As mentioned earlier, the user can be personally identified through the use of a fundus pattern detected by the visual sensor 19 or a signal detected by the biological sensor 22. If, for instance, the fundus pattern or biological information about a particular user is registered, the system controller 10 can judge whether the image pickup apparatus 1 (1A) is mounted on the particular user.

Consequently, the system controller 10 can perform personal authentication when the image pickup apparatus 1 is mounted on a particular user. When the particular user is recognized, the system controller 10 can conclude that the imaging start trigger is generated, and exercise imaging start control.

Typical judgments about imaging start trigger generation have been described with reference to FIGS. 13 and 14. However, the judgments about recording or transmission start trigger generation, which are described with reference to the process examples shown in FIGS. 11 and 12, should also be formed in accordance, for instance, with an conscious behavior, unconscious behavior, physical status, or personal authentication of the user as indicated by the examples shown in FIGS. 13 and 14.

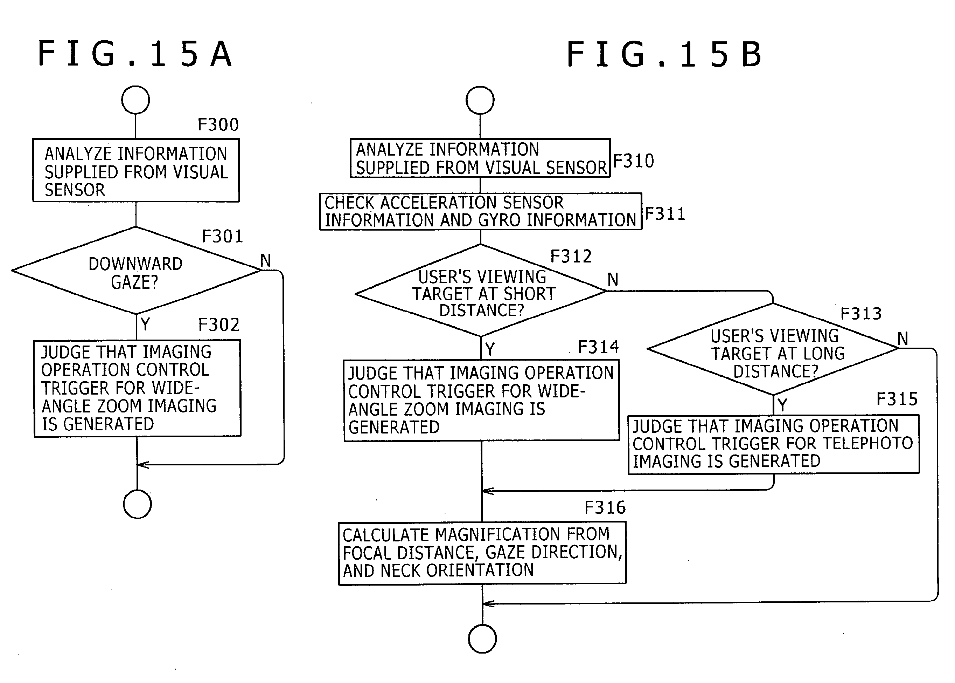

Next, typical processes concerning the judgment about imaging operation control trigger generation, which is formed in step F103 in FIG. 10 or in step F124 in FIG. 12, will be described with reference to FIGS. 15 to 18.

FIG. 15A shows an example in which zooming control is executed by user's gaze movements.

In step F300, which is shown in FIG. 15A, the system controller 10 analyzes the information supplied from the visual sensor 19. If, for instance, an image pickup section for imaging the user's eye is furnished as the visual sensor 19, the system controller 10 analyzes the image picked up by such an image pickup section.

If the system controller 10 detects that the user's gaze direction changes downward, the system controller 10 proceeds from step F301 to step F302 and concludes that the imaging operation control trigger for switching to wide-angle zoom imaging is generated.

When it is judged in step F302 that the imaging operation control trigger for wide-angle zoom imaging is generated, the process shown in FIG. 10 proceeds from step F103 to step F105 (the process shown in FIG. 12 proceeds from step F124 to step F128), and the system controller 10 instructs the imaging control section 11 to start a wide-angle zooming operation.

When the user gazes downward, the user attempts to read a newspaper or book or view a very near object in front his/her eyes. Therefore, when the above-mentioned wide-angle zoom imaging operation is performed, the resulting picked-up image clearly shows the vicinity of the user.

FIG. 15B shows an example in which zoom control is exercised in accordance with the motion of the user's neck (head) and the focal distance of the user's eye.

In step F310, which is shown in FIG. 15B, the system controller 10 analyzes the information supplied from the visual sensor 19, and detects the focal distance of the user's eye and the user's gaze direction. In step F311, the system controller 10 monitors the information (acceleration signal and angular velocity signal) detected by the acceleration sensor 20 and gyro 21 and judges the motion of the user's neck.

In steps F312 and F313, the system controller 10 judges in accordance with the results of focal distance and neck orientation detections whether the user is viewing a near object or far object.

When it is judged that the user is viewing a near object, the system controller 10 proceeds from step F312 to step F314 and concludes that the imaging operation control trigger for wide-angle zoom display is generated. In step F316, the system controller 10 calculates an appropriate zoom magnification from the current focal distance and user neck (head) orientation.

When, on the other hand, it is judged that the user is viewing a far object, the system controller 10 proceeds from step F313 to step F315 and concludes that the imaging operation control trigger for telephoto zoom display is generated. In step F316, the system controller 10 calculates an appropriate zoom magnification from the current focal distance and user neck (head) orientation.

When steps F314 and F316 or steps F315 and F316 are completed, the system controller 10 proceeds from step F104 to step F106 in FIG. 10 (or from step F124 to step F128 in FIG. 12), and instructs the imaging control section 11 to perform a zooming operation at the calculated magnification.

Consequently, a wide-angle image or a telephoto image that looks like FIG. 5C is picked up in accordance with a scene that the user is attempting to view.

In the examples shown in FIGS. 15A and 15B, the picked-up image is varied by allowing the image pickup section 3 to perform a zooming operation. Alternatively, however, the imaging signal processing section 15 may perform, for instance, an image enlargement/image reduction process in accordance with the gaze direction, focal distance, neck orientation, or the like.

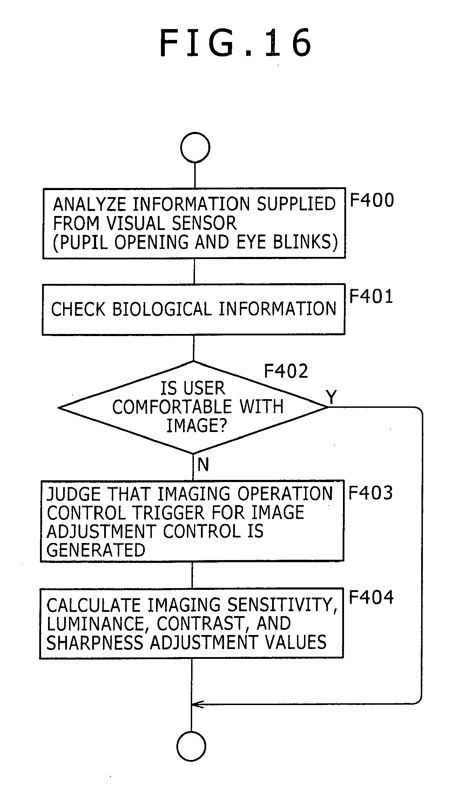

FIG. 16 shows an example in which an image comfortable for the user is picked up or a satisfactory image is picked up despite a dark surrounding area. This example is suitable particularly for a situation where the user is monitoring a picked-up image displayed on the display sections 2 of the image pickup apparatus 1 shown in FIGS. 1 and 3, which are positioned immediately before the eyes of the user.

In step F400, which is shown in FIG. 16, the system controller 10 analyzes the information supplied from the visual sensor 19 and detects the opening of the user's pupil or eye blinks (e.g., the number of eye blinks per unit time).

In step F401, the system controller 10 checks the brain wave, heart rate, perspiration amount, blood pressure, or other information supplied from the biological sensor 22.

The system controller 10 judges in accordance with the information supplied from the visual sensor 10 and biological sensor 22 whether the user is comfortable with a picked-up image that is displayed on the display sections 2 for monitoring purposes.

If it is judged that the user is not comfortable with the displayed picked-up image, the system controller 10 proceeds from step F402 to step F403 and concludes that the imaging operation control trigger for picked-up image adjustment control is generated.

In the above instance, step F404 is performed to calculate, for instance, imaging sensitivity, luminance level, contrast, sharpness, illumination level, and other adjustment values appropriate for the status of the user.

When steps F403 and F404 are completed, the system controller 10 proceeds from step F103 to step F105 in FIG. 10 (or from step F124 to step F128 in FIG. 12), and instructs the image pickup section 3 to adjust its imaging sensitivity and the imaging signal processing section 15 to make luminance, contrast, sharpness, and other adjustments. As a result, the quality of the picked-up image is adjusted to obtain a picked-up/displayed image for monitoring with which the user is comfortable. The obtained picked-up image looks like, for instance, FIG. 7B.

If it is judged according to the opening of the pupil that the surrounding area is dark, the system controller 10 may exercise control to let the illumination section 4 perform an illuminating operation.

When the above process is performed after detecting, for instance, the user's visual sensation or feeling (comfortable or uncomfortable), control can be exercised to ensure that the user is comfortable with the picked-up image.

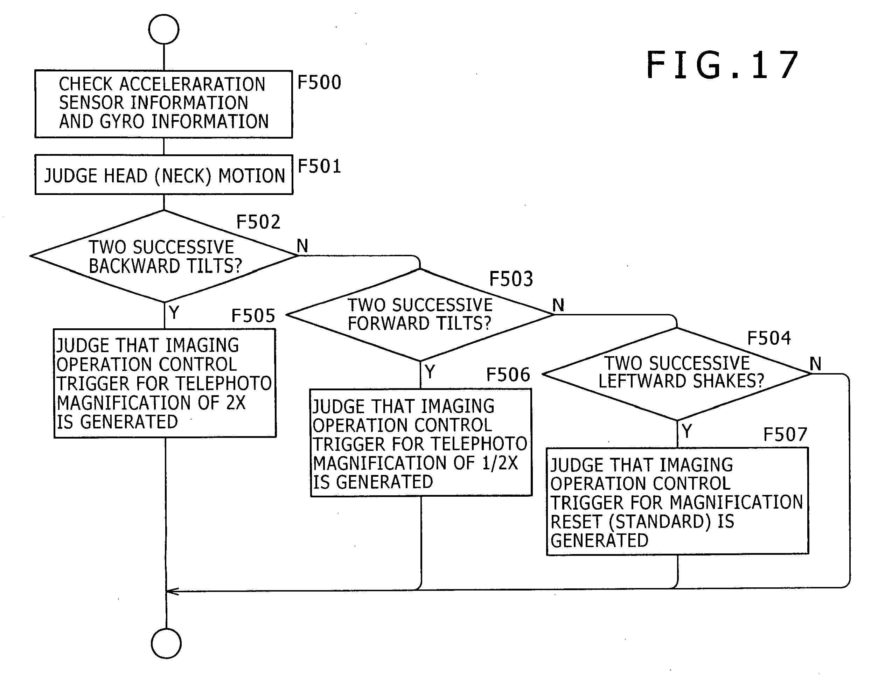

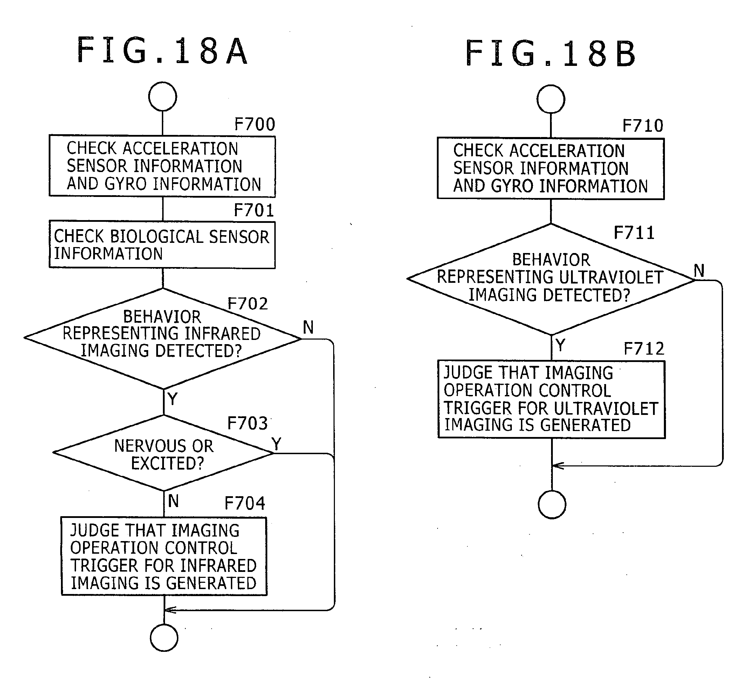

In the processes shown in FIGS. 15 and 16, the system controller 10 judges the status of the user and exercises image pickup operation mode control without waiting for the user to perform an intentional operation and while the user is unconscious of his/her motion. In the examples shown in FIGS. 17 and 18, however, a user's conscious behavior is regarded as an imaging control trigger (or one of a plurality of triggering conditions).

FIG. 17 shows a process in which the motion of a user's neck (head) is regarded as an operation.

In step F500, the system controller 10 monitors the information (acceleration signal and angular velocity signal) detected by the acceleration sensor 20 and gyro 21. In step F501, the system controller 10 judges the motion of the user's head. The system controller 10 performs step F501, for instance, to judge whether the head has been tilted twice backward or twice forward or shaken twice leftward.

If a sequence of two successive backward head tilts is detected, the system controller 10 proceeds from step F502 to step F505 and concludes that the imaging operation control trigger for switching to a telephoto magnification of 2X is generated.

In the above instance, the system controller 10 performs step F105 in FIG. 10 (or step F128 in FIG. 12) to instruct the imaging control section 11 to perform a zooming operation at a magnification of 2X. An image pickup operation is then conducted at a telephoto magnification of 2X.

If a sequence of two successive forward head tilts is detected, the system controller 10 proceeds from step F503 to step F506 and concludes that the imaging operation control trigger for switching to a telephoto magnification of 1/2X is generated. In this instance, the system controller 10 performs step F105 in FIG. 10 (or step F128 in FIG. 12) to instruct the imaging control section 11 to perform a zooming operation at a magnification of 1/2X. An image pickup operation is then conducted at a telephoto magnification of 1/2X.

If a sequence of two successive leftward head shakes is detected, the system controller 10 proceeds from step F504 to step F507 and concludes that the imaging operation control trigger for resetting the telephoto magnification is generated. In this instance, the system controller 10 performs step F105 in FIG. 10 (or step F128 in FIG. 12) to instruct the imaging control section 11 to perform a zooming operation at a standard magnification. An image pickup operation is then conducted at the standard magnification.

When the image pickup operation mode is changed after judging that a user's intentional motion is a trigger, as described above, it is possible to obtain a user-desired picked-up image.

It goes without saying that a motion of the entire body such as a jump or a motion of a hand, arm, or leg may be judged as a predefined operation in addition to a motion of the neck (head).

Further, control may be exercised depending on the behavior of the user to switch to another image pickup operation mode by exercising image enlargement control (see FIG. 6B), image reduction control, imaging sensitivity control, imaging frame rate switching control, infrared sensitivity-raised display control (see FIG. 8B), or ultraviolet sensitivity-raised display control (see FIG. 9B) instead of zoom control.

FIG. 18A shows an example of a process that is performed when an image pickup operation is to be conducted with the infrared sensitivity raised as described with reference to FIGS. 8A and 8B. In this example, an operation based particularly on a user's behavior is validated or invalidated depending on the physical status of the user.

In step F700, which is shown in FIG. 18A, the system controller 10 monitors the information (acceleration signal and angular velocity signal) detected by the acceleration sensor 20 and gyro 21, and judges, for instance, the motion of the user's neck and of the entire body.

In step F701, the system controller 10 checks the brain wave, heart rate, perspiration amount, blood pressure, or other information supplied from the biological sensor 22. The system controller 10 judges in accordance with the information supplied from the biological sensor 22 whether the user is nervous or excited.

When the system controller 10 detects that the user has behaved to demand an infrared image pickup operation (e.g., by shaking his/her head twice), the system controller 10 proceeds from step F702 to step F703 and judges whether the user is nervous or excited.

If it is judged that the user is neither nervous nor excited, the system controller 10 regards the user's behavior as a valid operation, proceeds to step F704, and concludes that the imaging operation control trigger for performing an image pickup operation with the infrared sensitivity raised is generated.

When step F704 is completed, the system controller 10 performs step F105 in FIG. 10 (or step F128 in FIG. 12) to issue an instruction for raising the infrared imaging sensitivity of the image pickup section 3. Consequently, the obtained picked-up image looks like FIG. 8B.

If, on the other hand, it is judged in step F703 that the user is nervous or excited, the system controller 10 concludes that the trigger for performing an image pickup operation with the infrared sensitivity raised is not generated. In other words, the system controller 10 invalidates the user's behavior and does not regard it as a valid operation.

As described above, the validity of an operation indicated by a user's behavior may be judged while considering the physical status of the user. This feature is effective, for instance, for preventing the abuse of a special image pickup function such as a function for picking up an image with the infrared sensitivity raised.

FIG. 18B shows an example of a process that is performed when an image pickup operation is to be conducted with the ultraviolet sensitivity raised as described with reference to FIGS. 9A and 9B.

In step F710, which is shown in FIG. 18B, the system controller 10 monitors the information (acceleration signal and angular velocity signal) detected by the acceleration sensor 20 and gyro 21, and judges, for instance, the motion of the user's neck and of the entire body.

When the system controller 10 detects that the user has behaved to demand an ultraviolet image pickup operation, the system controller 10 proceeds from step F711 to step F712 and concludes that the imaging operation control trigger for performing an image pickup operation with the ultraviolet sensitivity raised is generated.

When step F712 is completed, the system controller 10 performs step F105 in FIG. 10 (or step F128 in FIG. 12) to issue an instruction for raising the ultraviolet imaging sensitivity of the image pickup section 3. Consequently, the obtained picked-up image looks like FIG. 9B.

Examples of imaging operation control triggers and control operations for image pickup mode changeover have been described above. However, they are intended to be illustrative. It is needless to say that various other examples are conceivable.

For example, the information supplied from the acceleration sensor 20 and gyro 21 may be used to detect whether the user is at not walking, walking, or running. Such a detection can be used as an imaging operation control trigger to exercise control, for instance, to adjust the blur correction amount in the imaging signal processing section 15 or change the imaging frame rate depending on whether the user is at not walking, walking, or running.

Further, the examples described with reference to FIGS. 15 to 18 may be judged as the recording start trigger or transmission start trigger.

For example, the motion of the head that is described with reference to FIG. 17 may be judged as a user motion for demanding a recording or transmission operation and handled as the recording start trigger or transmission start trigger.

Moreover, one frame of picked-up image data may be handled as still image data and recorded in the storage section 25. In this instance, a recording trigger (shutter timing) may be judged in accordance, for instance, with the aforementioned behavior or physical status of the user to record one-frame image data (still image data) with such timing.

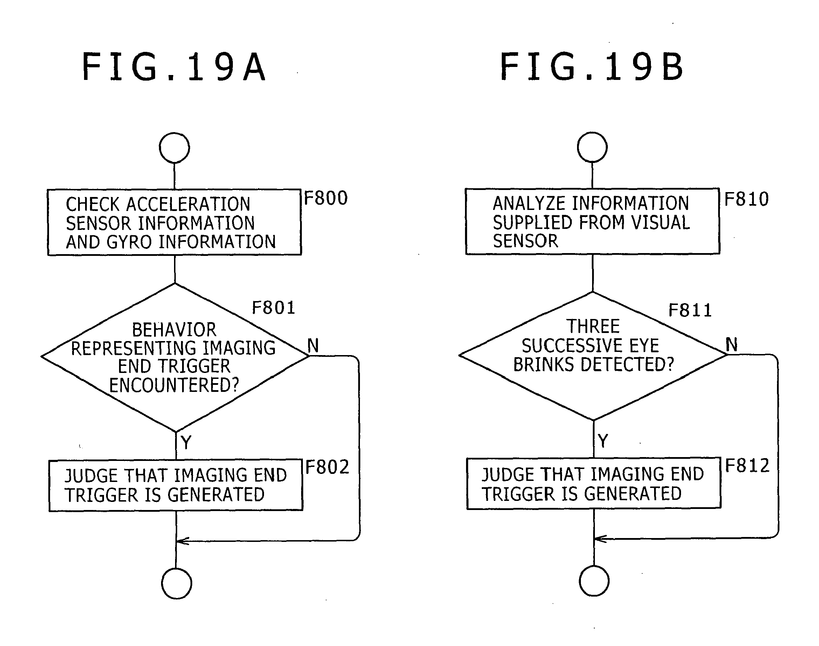

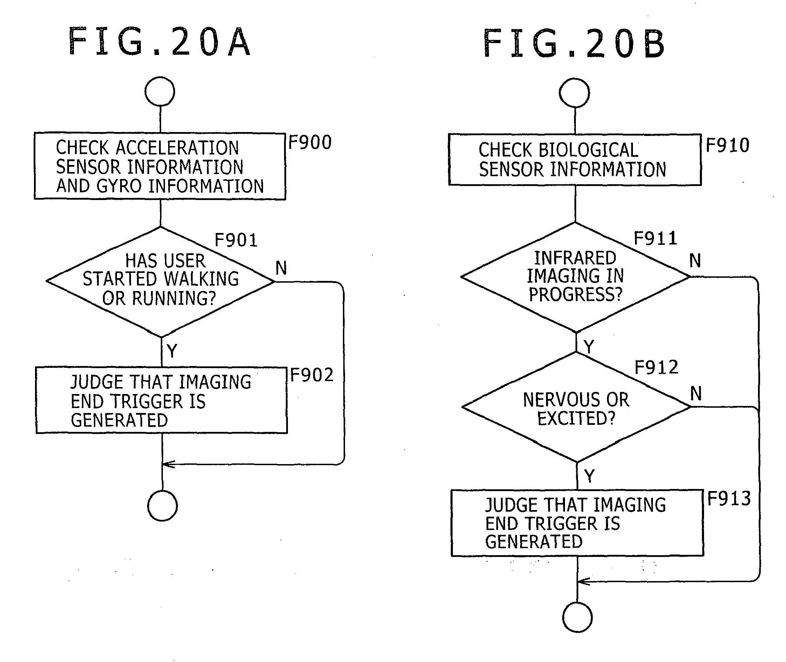

Typical judgments about imaging end trigger generation, which is detected in step F104 in FIG. 10 (or in step F114 in FIG. 11 or in step F125 in FIG. 12), will now be described with reference to FIGS. 19 and 20.

FIG. 19A shows an example of a process in which the user terminates an image pickup operation by exhibiting a conscious behavior.

In step F800, which is shown in FIG. 19A, the system controller 10 monitors the information detected by the acceleration sensor 20 and gyro 21 and judges, for instance, the motion of the user's neck or entire body.

When the system controller 10 detects that the user has behaved to demand the end of an image pickup operation, the system controller 10 proceeds from step F801 to step F802 and concludes that the monitor display end trigger for a picked-up image is generated.

When step F802 is completed, the system controller 10 proceeds to step F106 in FIG. 10 (or to step F117 in FIG. 11 or to step F129 in FIG. 12), and exercises imaging end control.

FIG. 19B also shows an example of a process in which the user terminates a monitor display operation by exhibiting a conscious behavior.

In step F810, which is shown in FIG. 19B, the system controller 10 analyzes the information supplied from the visual sensor 19. If, for instance, a sequence of three successive eye blinks is defined as a user demand for the end of an image pickup operation, the system controller 10 performs an image analysis to monitor for such a behavior.

When the system controller 10 detects that the user has blinked his/her eyes three times in succession, the system controller 10 proceeds from step F811 to step F812 and judges that the imaging end trigger is generated.

When step F812 is completed, the system controller 10 proceeds to step F106 in FIG. 10 (or to step F117 in FIG. 11 or to step F129 in FIG. 12), and exercises imaging end control.

The processes shown in FIGS. 19A and 19B are performed so that when the user demands the end of an image pickup operation, control is exercised in accordance with the intention of the user to terminate an image pickup operation.

It goes without saying that various other user behaviors may be judged as the imaging end trigger.

FIG. 20A shows an example of a process in which the apparatus automatically reverts to the see-through state in accordance with a user's motion (a motion performed without being conscious of a particular operation).

In step F900, which is shown in FIG. 20A, the system controller 10 monitors the information detected by the acceleration sensor 20 and gyro 21 and judges the motion of the user's entire body. The system controller 10 detects particularly whether the user is at not walking, walking, or running.

If it is judged that the user has started walking or running, the system controller 10 proceeds from step F901 to step F902 and concludes that the imaging end trigger is generated.

When step F902 is completed, the system controller 10 performs step F106 in FIG. 10 (or step F117 in FIG. 11 or step F129 in FIG. 12) to exercise imaging end control.

It is assumed that an image pickup operation ends when the user starts walking or running. However, alternative control may be exercised so as to judge that the imaging start trigger is generated when the user starts walking or running, and start an image pickup operation.

Further, in a situation where the display sections 2 are positioned immediately before the eyes as in the image pickup apparatus 1 shown in FIGS. 1 and 3, it is preferred that the display sections 2 revert to the see-through state when the user starts walking or running. Therefore, when the system controller 10 detects that the user is walking or running, it may be judged as a trigger for continuing with an image pickup operation but terminating a monitor display operation.

An alternative to adopt when the user is walking or running would be to switch to a state where a normally-picked-up image is obtained as shown in FIG. 5B so that the resulting monitor display state is the same as the see-through state.

FIG. 20B shows an example of a process in which the apparatus automatically terminates an image pickup operation in accordance with the physical status of the user. This example is particularly effective for preventing the abuse of an infrared image pickup function.

In step F910, which is shown in FIG. 20B, the system controller 10 checks the brain wave, heart rate, perspiration amount, blood pressure, or other information supplied from the biological sensor 22. The system controller 10 judges in accordance with the information supplied from the biological sensor 22 whether the user is nervous or excited.

If an image pickup operation is being performed with the infrared sensitivity raised, the system controller 10 proceeds from step F911 to step F912 and judges whether the user is nervous or excited.

If it is judged that the user is neither nervous nor excited, the system controller 10 allows the image pickup operation to be continuously performed with the infrared sensitivity raised. However, if it is judged that the user is nervous or excited, the system controller 10 proceeds to step F913 and concludes that the imaging end trigger is generated.

When step F913 is completed, the system controller 10 performs step F106 in FIG. 10 (or step F117 in FIG. 11 or step F129 in FIG. 12) to exercise imaging end control.

Terminating an image pickup operation performed with the infrared sensitivity raised in accordance with the physical status of the user is effective for preventing the user from abusing the function for picking up an image with the infrared sensitivity raised.

The foregoing description assumes that the system controller 10 terminates the image pickup operation. However, an alternative would be, for instance, to let the system controller 10 terminate the image pickup operation performed with the infrared sensitivity raised, and switch to a normal image pickup operation.

Judgments about imaging end trigger generation have been described with reference to FIGS. 19 and 20. However, the judgments about recording or transmission end trigger generation, which are described with reference to the process examples shown in FIGS. 11 and 12, should also be formed in accordance, for instance, with an conscious behavior, unconscious behavior, or physical status of the user as indicated by the examples shown in FIGS. 19 and 20.

### 6. Advantages of Embodiments and Modified or Extended Embodiments

According to the embodiments of the present invention, which have been described above, the start, end, and mode of an image pickup operation that the image pickup section 3 positioned in an eyeglass-type or head-worn mounting unit performs while regarding the user's gaze direction as the direction of a subject are controlled by judging the intention or status of the user in accordance with the information about the user's behavior or physical status to perform a precise image pickup operation in accordance with the intention or status of the user and without imposing an operating load on the user. This ensures that a scene visible in the user's gaze direction is imaged in an appropriate mode with precise timing. Further, when picked-up image data and audio data are recorded in the storage section 25 or transmitted to an external device from the communication section 26 in accordance with the user's behavior or physical status, the scene visible to a certain user can be shared by a plurality of persons or later reproduced and viewed. It means that the scene visible to the user who wears the image pickup apparatus 1 (1A) can be utilized in various ways.

The description of the embodiments of the present invention mainly relates to image pickup operation control that is exercised by controlling the image pickup operation of the image pickup section 3 and the signal processing operation of the imaging signal processing section 15. However, power on/off/standby switching control, signal processing control over the display image processing section 12, and sound volume/sound quality control over the audio output from the audio output section 5 may be exercised in accordance with the user's behavior or physical status. For example, the information supplied from the biological sensor 22 may be used to adjust the sound volume in consideration of user comfort.

The appearance and configuration of the image pickup apparatus 1 (1A) are not limited to those of the examples shown in FIGS. 1, 2, 3, and 4, and may be modified in various manners.

For example, the image pickup apparatus 1 (1A) may include either the storage section 25 or the communication section 26 or may include a monitor display system without incorporating the storage section 25 or communication section 26.

Further, the image pickup apparatus 1 (1A) may include a character recognition section, which recognizes text within an image, and a speech synthesis section, which performs a speech synthesis process. If text is contained in a picked-up image, the image pickup apparatus 1 (1A) may cause the speech synthesis section to generate an audio signal for a text reading voice and let the audio output section 5 output the audio signal.

The description of the embodiments of the present invention assumes that the image pickup apparatus 1 has an eyeglass-type or head-worn mounting unit. However, the present invention is applicable to the image pickup apparatus as far as it is configured to be capable of picking up an image in the user's gaze direction. For example, a headphone type, neck band type, ear hook type, or any other mounting unit may be used to mount the image pickup apparatus 1 on the user. Further, the image pickup apparatus 1 may be clipped onto or otherwise fastened to regular eyeglasses, visor, headphone, or other item that the user wears. The image pickup apparatus may be attached to any part of the user's body.

It should be understood by those skilled in the art that various modifications, combinations, subcombinations, and alterations may occur depending on design requirements and other factors insofar as they are within the scope of the appended claims or the equivalents thereof.

## Claims

1. An image pickup apparatus comprising:
image pickup means configured to pick up an image while regarding a user's gaze direction as the direction of a subject;
user information acquisition means configured to acquire information about the motion or physical status of the user; and
control means configured to judge the intention or status of the user from the information acquired by the user information acquisition means and control the operation of the image pickup means in accordance with judgment results.

2. The image pickup apparatus according to claim 1, further comprising:
display means configured to display the image picked up by the image pickup means.

3. The image pickup apparatus according to claim 1, further comprising:
recording means configured to record the image picked up by the image pickup means on a recording medium.

4. The image pickup apparatus according to claim 3, wherein the control means controls the start or end of a recording operation of the recording means in accordance with the information acquired by the user information acquisition means.

5. The image pickup apparatus according to claim 1, further comprising:
transmission means configured to transmit the image picked up by the image pickup means to an external device.

6. The image pickup apparatus according to claim 5, wherein the control means controls the start or end of a transmission operation of the transmission means in accordance with the information acquired by the user information acquisition means.

7. The image pickup apparatus according to claim 1, wherein the image pickup means uses a CCD sensor or a CMOS sensor as an image pickup device.

8. The image pickup apparatus according to claim 1, wherein the user information acquisition means is a sensor for detecting acceleration, angular velocity, or vibration.

9. The image pickup apparatus according to claim 1, wherein the user information acquisition means is a sensor for detecting the motion of a head of the user, the motion of an arm of the user, the motion of a hand of the user, the motion of a leg of the user, or the motion of the entire body of the user.

10. The image pickup apparatus according to claim 1, wherein the user information acquisition means is a sensor for detecting that the user is not walking, is walking, or is running.

11. The image pickup apparatus according to claim 1, wherein the user information acquisition means is a visual sensor for detecting the visual information about the user.

12. The image pickup apparatus according to claim 1, wherein the user information acquisition means is a sensor for detecting the direction of the user's gaze, the focal distance of the user, the status of a user's pupil, the fundus pattern of the user, or the motion of a user's eyelid as the visual information about the user.

13. The image pickup apparatus according to claim 1, wherein the user information acquisition means is a biological sensor for detecting the biological information about the user.

14. The image pickup apparatus according to claim 1, wherein the user information acquisition means is a sensor for detecting the heartbeat information about the user, the pulse information about the user, the perspiration information about the user, the brain wave information about the user, the galvanic skin reflex information about the user, the blood pressure information about the user, the body temperature information about the user, or the respiratory activity information about the user as the biological information about the user.

15. The image pickup apparatus according to claim 1, wherein the user information acquisition means is a biological sensor for detecting information indicating that the user is nervous or excited.

16. The image pickup apparatus according to claim 1, wherein the control means controls the start or end of an image pickup operation of the image pickup means.

17. The image pickup apparatus according to claim 1, wherein the control means exercises variable control over telephoto imaging and wide-angle imaging functions of the image pickup means.

18. The image pickup apparatus according to claim 1, wherein the control means exercises focus control of the image pickup means.

19. The image pickup apparatus according to claim 1, wherein the control means exercises variable control over an imaging sensitivity of the image pickup means.

20. The image pickup apparatus according to claim 1, wherein the control means exercises variable control over infrared imaging sensitivity of the image pickup means.

21. The image pickup apparatus according to claim 1, wherein the control means exercises variable control over ultraviolet imaging sensitivity of the image pickup means.

22. The image pickup apparatus according to claim 1, wherein the control means exercises variable control over a frame rate of the image pickup means.

23. The image pickup apparatus according to claim 1, wherein the control means exercises operational control over an imaging lens system of the image pickup means.

24. The image pickup apparatus according to claim 1, wherein the control means exercises operational control of an imaging signal processing means that processes an imaging signal obtained by the image pickup device in the image pickup means.

25. The image pickup apparatus according to claim 1, further comprising:
illumination means configured to illuminate in the direction of the subject,
wherein the control means controls an illumination operation of the illumination means in accordance with the information acquired by the user information acquisition means.

26. An image pickup method for use in an image pickup apparatus that includes image pickup means configured to pick up an image while regarding a user's gaze direction as the direction of a subject, the method comprising the steps of:
acquiring information about the motion or physical status of the user; and
judging the intention or status of the user from the information acquired in the user information acquisition step and controlling the operation of the image pickup means in accordance with judgment results.

27. The image pickup method according to claim 26, further comprising the step of:
transmitting the information picked up by the image pickup means to the outside in accordance with the information acquired in the user information acquisition step.

28. The image pickup method according to claim 26, further comprising the step of:
starting or finishing recording the information acquired by the image pickup means in accordance with the information acquired in the user information acquisition step.

29. The image pickup method according to claim 26, further comprising the step of:
controlling the illumination operation of illumination means in accordance with the information acquired in the user information acquisition step.
